(19) **Europäisches Patentamt / European Patent Office / Office européen des brevets**

(11) **EP 2 265 788 B1**

(12) **EUROPEAN PATENT SPECIFICATION**

(45) Date of publication and mention
of the grant of the patent:
**29.04.2020 Bulletin 2020/18**

(21) Application number: **09719019.3**

(22) Date of filing: **12.03.2009**

(51) Int Cl.:
***E06B 1/60*** *(2006.01)* ***F16B 35/06*** *(2006.01)*

(86) International application number:
**PCT/SE2009/050257**

(87) International publication number:
**WO 2009/113957 (17.09.2009 Gazette 2009/38)**

(54) **IMPROVED FRAME SCREW**

VERBESSERTE RAHMENSCHRAUBE

VIS DE CADRE AMÉLIORÉE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **12.03.2008 SE 0800574**

(43) Date of publication of application:
**29.12.2010 Bulletin 2010/52**

(73) Proprietor: **Jeld-Wen Sverige AB
265 81 Åstorp (SE)**

(72) Inventors:
• **BRESMAN, Jonas
260 60 Kvidinge (SE)**

• **MÖLLER, Jörgen
265 35 Åstorp (SE)**

(74) Representative: **Zacco Sweden AB
P.O. Box 5581
114 85 Stockholm (SE)**

(56) References cited:
| | |
|---|---|
| WO-A1-90/04695 | WO-A1-90/04695 |
| WO-A1-2007/145580 | DE-A1- 3 148 223 |
| LU-A1- 86 872 | SE-C2- 519 659 |
| US-A- 1 238 636 | US-A- 2 764 053 |
| US-A- 5 772 376 | US-A- 5 778 623 |
| US-A1- 2004 230 196 | US-B1- 6 334 748 |

**Description**

TECHNICAL FIELD

The invention relates to a frame screw comprising a sleeve comprising cylindrical unit and an outer flange. The cylindrical unit comprises a threaded outer casing designed with a bore that passes through in an axial direction and comprises a first section designed with a cross section in a radial direction that is suitable for the insertion of a tool that is intended to rotate the cylindrical unit. The frame screw comprises a fixing device that can be inserted into the bore.

BACKGROUND ART

Doors and windows comprise a frame that surrounds a main part. The main part can consist of a pivoting unit such as a door or a window, both of which are attached to one side of the frame in such a way that they can pivot. In addition, in the case of a window, the main part can consist of a fixed glazed unit.

For the installation of doors and windows in a building, the use of frame screws for attaching the frame to the building is already known. The frame screw comprises a casing comprising an outer flange and a cylindrical unit with a threaded outer casing, and a fixing device in the form of a screw.

The cylindrical unit is designed with a bore that passes through in an axial direction. A first section of the bore is designed with a cross section in a radial direction that is suitable for the insertion of a tool, and can consist, for example, of a triangular, four-sided, five-sided, hexagonal or other suitable shape that provides a good engagement between the tool and the bore. In addition, in the bore there is an inner flange comprising a specially-designed matching-fit section. The matching-fit section is intended to receive a tool with a corresponding shape as the matching-fit section, for example a triangular, four sided, five-sided, hexagonal or other suitable shape that provides a good engagement between the tool and the matching-fit section. The screw comprised in the frame screw is designed to be fastened into the building in such a way that it creates a fixing between the frame and the building. The screw fits into the bore in such a way that the head of the screw and a part of the fixing device that extends from the head are hidden in the bore, while the remaining part of the screw protrudes out from the cylindrical unit and is intended to be fixed into the fabric of the building. During installation of the frame, the head of the screw is intended to make contact with the inner flange by means of the pressure when the screw is screwed into the building as described below.

During the installation of doors and windows, the following elements are carried out:

- A hole is pre-drilled in the frame, into which the cylindrical unit is screwed via the external threads and by means of the tool that is arranged in the matching-fit section. The cylindrical unit is screwed into the hole in such a way that essentially the whole cylindrical unit is hidden in the hole. The outer flange, which shall be countersunk into the frame, can be provided with a machining device that countersinks the outer flange when the casing is screwed in. Such a machining device is for instance known from SE 0440696, but common to all such known devices is that the material splinters and gives raise to unattractive edges. An additional problem with splintering is that the splinter may end up between the end face of the outer flange and the surface against which the end face is intended to contact, which can give raise to a deviated construction.

- The frame is placed in an opening that is arranged in the fabric of the building, whereupon the screw is inserted into the bore from the inside of the frame, that is from the side of the frame towards which the door/window will face.

- Thereafter, the fixing device is screwed into the fabric of the building.

WO 90/04695 A1 discloses an adjustable fastener comprising an externally threaded stem with a through hole comprising a stop for a screw head. The fastener further comprises a head provided with one or more diametral and vertical cutting edges provided on the external edge portion of the head. The head also comprises radial recesses arranged to discharge material when the head is screwed into a frame.

According to a known model of the frame screw, the installation of the frame screw has been completed when the screw has been screwed into the fabric of the building, but according to another model, one step remains, namely:

- the cylindrical unit is partially screwed out from the frame by means of a tool that is inserted into the bore from the inside of the frame, until the end face of the outer flange is in contact with the fabric of the building and exerts a pressure on the fabric of the building from the frame. By adjusting the pressure, the position of the frame can be adjusted in relation to the fabric of the building. If the cylindrical unit has essentially changed position, the fixing device may need to be screwed in further in order for a tension fixing to be achieved between the frame screw (and hence the frame) and the fabric of the building.

Both the models described above have been available on the market for over 50 years and for all this time have been associated with a well-known problem. The problem is that the frame can move in relation to the fabric of the building after installation. In the case of an opening door or an opening window, the tolerances are small between the frame and the pivoting unit, so that only a small displacement of the frame is sufficient to give certain parts of the pivoting unit a negative clearance in relation to the frame. When such a situation arises, the frame must be adjusted in order for a positive clearance to be obtained once again. It has been known for a long time that such adjustments are necessary over a period of time "until the door has settled". The problem with deviation due to splintering has been mentioned above.

There is a particularly difficult problem when the frame screw is to be used in association with concrete, steel and brick, and other materials that require a plug into which the fixing device is to be screwed. In order to be able to insert the plug, a hole must be drilled via the cylindrical unit. As the plug has an external diameter that exceeds the diameter of the fixing device, a drill bit with a diameter that exceeds the diameter of the fixing device must be used. The drill bit is inserted through the cylindrical unit and the hole is drilled in the fabric of the building. The plug is inserted into the drilled hole after having been passed though the cylindrical unit. As the bore must have a diameter that suits the drill bit and the plug, and as the fixing device must have a smaller diameter that is suitable for being screwed into a smaller internal diameter in the plug, there is a great difference in diameter between the bore and the fixing device, which enables the abovementioned pivoting of the frame to occur.

The problem described above with deviation and unattractive edges has thus been known for a long time, and hence it has been recognised for a long time that there is a need for an improved device and an improved method for the installation of doors and windows, in particular when the door/window comprises a pivoting unit.

DISCLOSURE OF INVENTION

The present invention is intended to solve the problems described above, by means of a frame screw comprising a casing comprising a cylindrical unit with an at least partially threaded outer casing and an outer flange comprising an end face, which projects radially outside of the outer casing. The outer flange comprises an edge part, which limits the outer flange radially. The cylindrical unit is designed with a bore that passes through in an axial direction. The bore comprises a first section designed with a cross section in a radial direction that is suitable for the insertion of a tool that is intended to rotate the cylindrical unit, and an inner flange comprising an inner section.

The cross section of the bore can consist, for example, of a triangular, four-sided, five-sided, hexagonal or other suitable shape that provides a good engagement between the tool and the bore. In addition, the bore comprises an inner flange comprising an inner section.

The frame screw comprises a fixing device that can be inserted into the bore. By "can be inserted" is meant that the fixing device can move freely in the bore in an axial direction and that the cylindrical unit can be rotated around the fixing device when the fixing device is fixed in an external unit, for example the fabric of a building.

The outer flange comprises a machining surface having an extent from the edge part to the outer casing, the machining surface being arranged at an angle Φ relative to the normal to the outer casing. The outer flange comprises through holes extending from the end face through the outer flange to the machining surface. The end face comprising first openings for the respective holes, and wherein the machining surface comprises corresponding second openings. Each second opening being delimited by a front edge and a rear edge comprising a cutting edge arranged to machine a surface of a workpiece into which the casing is intended to be screwed, wherein the hole is arranged to evacuate material machined by the cutting edge away from the workpiece, wherein the angle Φ is greater than zero and that the through holes (31) are delimited by the edge part (12b).

An advantage of the invention is that the machining surface according to the invention generates a depression in the workpiece without appearance of splintering, which reduces the risk of a wrongly adjusted frame screw. The above mentioned detail can be a frame for a door, or a frame to a window, which implies that the invention in particular simplifies the installation of doors and windows, because the machining surface generates an optimal depression without edge splintering and consequently reduced risk of deviation.

The end face has a spread in the radial direction which exceeds the spread of the outer casing in the radial direction. The difference should be of such an extent that the holes in the outer flange have space without weakening the flange such that it can collapse during the countersink process.

The machining surface can be symmetrically, and/or asymmetrically conical around the centre of rotation axially, and/or symmetrically or asymmetrically convex, and/or symmetrically or asymmetrically concave. In addition, the machining surface can have different radii along its axial spread.

The holes are each arranged in the outer flange at an angle $\varphi 1$ and $\varphi 2$ relative to a normal N to the end face, wherein the angles $\varphi 1$ and $\varphi 2$ being substantially perpendicular to each other. The angle $\varphi 1$ is measured substantially in the direction of rotation, or in a tangent to the direction of rotation, and $\varphi 2$ substantially in radial extension, i.e. in a direction from a centre axis of the casing toward the edge part of the outer flange. With "centre axis" an axis of rotation with axial extension is intended, substantially perpendicular against radial extension.

According to an aspect, the machining surface comprises recesses arranged with an extent substantially in a rotational direction of the casing. Each recess extending in the rotational direction from the front edge of the second opening to a position before the rear edge of the next second opening, i.e. the cutting edge. The recesses extend sufficiently far towards the holes that the front edge is lower than the rear edge. The difference enables the cutting edge to machine the material of the workpiece, especially when the angle Φ is close to, but greater than, zero.

The edge part has a thickness which allows the edge part to resist bending when the sleeve is screwed into the workpiece in such a way that the edge part comes into contact with the workpiece. The edge part consequently being able to bear against the workpiece and machine the workpiece when the sleeve is screwed into the workpiece. The fact that the edge part is part of the countersink process is of advantage since this further reduces the risk of edge splintering. When the holes transport the machining material away from below the machining surface can the edge part compress the material in the workpiece to an even and circular depression.

Given below is an example of steel frame screw according to the invention, which empirically has performed well in practice:
The diameter of the outer flange is 28 mm.

The outer flange comprises 8 holes each with a diameter of 5 mm and an angle $\varphi 1$ of 0-10 degree and an angle $\varphi 2$. The holes are not radially displaced.

The machining surface lacks recess.

The angel Φ is about 30 degrees.

The machining surface is formed as a symmetrical cone.

The material thickness between the edge part and the holes is 1 - 2 mm.

The diameter if the outer casing is about 14 mm.

The total length of the sleeve is 28 mm.

The length of the outer casing is 24 mm.

The threads have a length of 15 mm.

The threads have a diameter of about 17 mm.

There are about 5 threads per cm.

The threads start about 5 mm from the edge of the outer casing.

The edge of the outer casing is bevelled for guiding the sleeve in the workpiece.

The length of the outer flange = the total length of the sleeve minus the length of the outer casing.

The bore has the same length as the sleeve.

With length is meant axial direction, and with diameter is meant radial direction.

The frame screw can be formed in metal, plastic, composite material, or other suitable material, which is harder than the surface to be machined.

The frame screw comprises a fixing device, which is insertable into the bore. With insertable is meant that the fixing device can travel freely inside the bore in the axial direction, and that the cylindrical unit can be rotated around the fixing device when the fixing device is fixedly arranged in an external unit, for instance the fabric of a building.

According to an embodiment of the invention, the frame screw comprises an adapter arranged at least partially in the bore. The adapter comprises an outer part arranged to fit in the bore and an inner part arranged to comprise at least a part of a guiding section. The inner part of the adapter thus comprises a bore, i.e. a hole that passes right through.

The guiding section has a cross section D1 in a radial direction that is determined by the length L1 of the guiding section in an axial direction in such a way that the guiding section limits the radial freedom of movement of the central axis of the fixing device in relation to the central axis of the guiding section to a movement of a predetermined maximal size at the end surface of the cylindrical unit.

An advantage of the invention is that the frame screw reduces the risk of deviation, and makes possible a more robust fixing between the frame and the fabric of the building, with the abovementioned problems of the frame pivoting having been eliminated or at least having been reduced significantly.

The movement of the fixing device consists of two possible directions of movement. The first direction of movement consists of a translatory movement in a radial direction (below called the radial freedom of movement) in which the whole fixing device has a parallel movement. The second direction of movement consists of the fixing device being able to pivot within the guiding section (below called the pivoting freedom of movement)

The radial freedom of movement, Rradial, of the fixing device is limited to a movement of a maximum of 0.5 mm from the central axis of the fixing device to the central axis of the guiding section at the end surface of the cylindrical unit. This value is taken for a newly-fitted door in a frame with a gap between the door and the frame of approximately 2.5 mm. This value is thus not an absolute amount for the invention, but is rather intended to provide an expert in the field with an indication of the possibilities of the invention. A smaller or a larger value is thus possible and can be ensured by changing the diameter and length of the guiding section as described below.

The values given above are taken as examples of empirically determined values that give rise to a permitted pivoting of the door frame without the pivoting giving rise to so large a deviation that the door can not be opened and closed in an unobstructed way. The frame screw according to the invention enables the pivoting of the frame to be minimized by increasing the length of the guiding section in an axial direction.

The pivoting freedom of movement of the fixing device is limited to an approximate maximal angle $\alpha$ = arctangents $(1/20) \approx 2.90°$ of the central axis of the fixing device in relation to the central axis of the guiding section, when Rradial is 0.5 mm and the guiding section is 2 cm long, and extends all the way to the frame. Formulae for this calculation are to be found below.

There is a relationship between the radial freedom of movement, the length of the guiding section and the pivoting freedom of movement that will be described in greater detail below.

In order for the cylindrical unit to be able to be rotated around the fixing device, it is necessary for there to be a positive clearance between the fixing device and the guiding section, or at least a zero clearance.

The fixing device can consist of a screw or a spike or the like. The screw advantageously comprises a supporting section in the form of a cylindrical part with a smooth outer surface that is designed to fit into the guiding section in such a way that the abovementioned limitation of the movement of the fixing device is achieved. A spike can also comprise a supporting section in the form of such a cylindrical part, but the supporting section can also have a number of grooves or the like, with the outer parts of the grooves, viewed in a radial direction, constituting contact surfaces within and against the guiding section.

According to an embodiment of the invention, the bore comprises an inner flange creating part of the guiding section and a specially-designed matching-fit section. The guiding section is here located between the first section and the matching-fit section. The matching-fit section is located between the guiding section and an end surface of the cylindrical unit. The end surface has an extent in a plane in a radial direction. The matching-fit section is intended to receive a tool with a corresponding shape as the matching-fit section, for example triangular, four-sided, five-sided, hexagonal or other suitable shape in order to obtain a good engagement between the tool and the matching-fit section. The adapter can be arranged in the bore in such a way that the inner section of the inner flange and the inner part of the adapter together create the guiding section. The adapter can also be arranged in the bore in such a way that the shape of the outer part of the adapter is determined by the inner section of the inner flange and the matching-fit section in such a way that only the inner part of the adapter creates the guiding section.

According to an embodiment of the invention, the bore comprises only the first section and the inner flange. The adapter is here arranged in the inner section of the inner flange. As in the embodiments described above, the guiding section is located between the first section and the end surface of the cylindrical unit. The end surface advantageously comprises a peripheral part in the form of an inner flange designed to receive a tool with a corresponding shape as the peripheral part, for example triangular, four-sided, five-sided, hexagonal or other suitable shape in order to obtain a good engagement between the tool and the peripheral part upon rotation of the cylindrical unit. The end surface does not need to have such a peripheral part designed to receive a tool, but can comprise one or more recesses or the like designed for a tool with corresponding projecting parts intended to be used to rotate the cylindrical unit.

As mentioned above, the frame screw is intended to be used when fitting a door or a window arrangement in a building. The arrangement comprises a frame that is intended to be fixed in the fabric of the building, after which the actual door or window is fitted in the frame. The cylindrical unit of the frame screw is screwed into the frame from the outside of the frame, that is from the side of the frame that faces towards the fabric of the building, using a tool mounted in the matching-fit section or in the peripheral part or in some other suitable arrangement that fits the tool. Following this, the frame is positioned in an opening arranged in the fabric of the building, after which the fixing device is inserted into the bore from the inside of the frame, that is from the side of the frame that faces away from the fabric of the building. The fixing device is then secured in the building, whereby a fixing is created between the frame and the building. In addition, the cylindrical unit is screwed out from the frame in the direction towards the fabric of the building by means of a tool that is fitted in the first section. The cylindrical unit is screwed out from the frame until an end surface of the cylindrical unit is in contact with the fabric of the building, whereby the fixing between the frame and the fabric of the building is made stronger and, in addition, the distance between the frame and the fabric of the building is fixed. The fixing device is thereafter inserted yet further in the direction towards the fabric of the building until the head of the fixing device is in contact with the inner flange in the bore in such a way that the fixing device exerts a pulling force towards the inner flange in the direction towards the fabric of the building.

When the frame screw has been screwed in place in the frame, the matching-fit section according to the embodiment above is no longer necessary for the function of the frame screw. In this embodiment, there are three alternatives for the invention. The first alternative is that the guiding section is of such a length and has such tolerances in relation to the supporting section of the fixing device that the radial freedom of movement of the fixing device is limited according to the above. The second alternative is that the frame screw comprises an adapter comprising an outer part with a shape that corresponds to the matching-fit section and an inner part with corresponding dimensions to the guiding section in the inner flange. The inner part of the adapter thus comprises a part of the guiding section of the frame screw and thereby increases the length of the guiding section in an axial direction. An advantage of such an arrangement is that the tolerances of the guiding section in relation to the supporting section of the fixing device can be increased, that is the clearance between the fixing device and the guiding section can be greater with increased length while maintaining the radial freedom of movement. The third alternative is that the adapter is designed to fit into both the matching-fit section and the guiding section. The inner part of the adapter thus comprises the whole guiding section of the frame screw and can be adjusted. Increased tolerances enable a less expensive method to be used for manufacturing the frame screw and, in addition, previously-known frame screws can be converted to create a better and more robust frame screw.

The adapter can be manufactured in plastic and/or metal and/or any other material that can be formed simply and inexpensively according to the above.

The reason that the tolerances can be increased is that the pivoting freedom of movement is reduced as the length of the guiding section is increased, according to the following formulae:

L1 = the length of the guiding section in an axial direction

L2 = the distance between the guiding section and the end surface of the cylindrical unit (including the guiding section).

D1 = the diameter of the guiding section

L3 = the length of the supporting section in an axial direction along the central axis of the fixing device

L4 = the distance between the head of the fixing device and the end surface of the cylindrical unit (excluding the head) along the central axis of the fixing device when the head of the fixing device is in contact with the inner flange. D2 = the diameter of the supporting section

α = the angle between the central axis of the fixing device and the central axis of the guiding arrangement

Rradial = the maximal radial movement of the central axis of the fixing device for given L1-L4, D1 and D2 in relation to the central axis of the cylindrical arrangement.

Rpivot = the maximal pivoting movement of the central axis of the fixing device for given L1-L4, D1 and D2 in relation to the central axis of the cylindrical arrangement.

$$Rradial = (D1-D2)/2$$

$$\alpha = arctangents\ ((D1-D2)/L1)$$

$$Rpivot = L4 \times tangents\ (\alpha) \times 1/2$$

$$Rpivot = L4 \times (D1-D2)/L1 \times 1/2$$

It should be noted that for a pivoted fixing device, Rpivot according to the above is an approximation. L4 is measured when the central axis of the fixing device lies parallel to the central axis of the guiding arrangement. The point on the central axis of the fixing device that constitutes the measurement point for Rradial and Rpivot is taken in the plane that coincides with the end surface of the cylindrical unit. In the event of pivoting, the same measurement point will be located slightly inside the said plane and the distance from the measurement point to the plane constitutes the approximation. The approximation is valid for small values of α.

L3 should always be equal to L1, or greater than L1, as, for example, a screw with a smaller L3 would mean that the threaded section of the screw, that could have a different diameter than the support section, would be inside the guiding arrangement and could change the conditions governing the freedom of movement of the fixing device. For the same reason, L3 is always equal to or greater than L4.

L2 is always equal to or greater than L1, and the larger L2 is in relation to L1, the smaller is the length of the guiding section. The guiding section has a maximal length L1=L2 determined by the definition of L2.

According to the formulae above, it can be seen that when L1 is increased, Rpivot and α are reduced, but that Rpivot increases as L4 is increased. In the first instance of the first embodiment, L1 and L3 must thus be determined by L4 in order that the maximal permitted value of Rpivot is not exceeded.

In the second and third instances of the embodiments, and in the further embodiment is L4 = L1 = L2, and L3 can be varied, but when L3 = L4, it is the case that Rpivot = Rradial. This does not affect the angle α, but an increase in L1 reduces the angle α and reduces the possibility of deviation of the frame.

In the second and third alternative respectively, the inner part of the adapter and the guiding section, or only the inner part of the adapter, create a guiding section where L4 = L1 which, according to the above, means that Rpivot = Rradial with the advantages that have been discussed above.

According to an embodiment of the invention, the inner flange comprises a specially-modified section, for example in the form of a cone, and the head of the fixing device comprises a corresponding part. The fixing device thus fits into the guiding section of the bore in such a way that the specially-modified part of the head fits into the modified section of the inner flange and the support section of the fixing device fits into the guiding section. An advantage of the embodiment is that the specially-designed section of the inner flange forms a part of the guiding section and controls the specially-designed part of the fixing device in such a way that the movement of the fixing device in relation to the cylindrical unit is minimized. This is due to the fact that, during installation of the frame, the head of the fixing device is in contact with the inner flange by means of the pressure when the fixing device is screwed into the building, as described below.

According to an embodiment of the invention, the bore comprises an inner flange creating the guiding section and a specially-designed matching-fit section. The matching-fit section is here located between the first section and the guiding section. The guiding section is located between the matching-fit section and an end surface of the cylindrical unit. The end surface has an extent in a plane in a radial direction. The matching-fit section is intended to receive the adapter that is arranged with a shape that corresponds to that of the matching-fit section, for example with a cross section that is round, triangular, four-sided, five-sided, hexagonal, or other geometric shape. The outer part of the adapter can have a different shape to the matching-fit section, provided that the outer part still fits in the matching-fit section in such a way that the adapter is not a loose fit in the matching-fit section. The adapter thus advantageously comprises an outer part with a shape that corresponds to that of the matching-fit section and an inner part with corresponding dimensions to those of the guiding section in the inner flange. Together with the guiding section, the inner part of the adapter creates a bore and thus forms a part of the guiding section for the frame screw and thereby increases the length of the guiding section in the axial direction.

An advantage of such an arrangement is that the tolerances of the guiding section in relation to the support section of the fixing device can be increased, that is the clearance between the fixing device and the guiding section can be greater with increased length while maintaining the radial freedom of movement.

According to another embodiment of the invention, the adapter is designed to fit into both the matching-fit section and the guiding section. The inner part of the adapter thus comprises the whole guiding section of the frame screw and can be adjusted to the required tolerances. An increased tolerance can enable a less expensive method to be used for manufacturing the frame screw and, in addition, previously-known frame screws can be converted to create a better and more robust frame screw.

The adapter provides the advantage that the bore in the cylindrical unit can be larger than is appropriate for the fixing device. An advantage of the bore being able to be larger is that a drill bit with a diameter that is larger than the diameter of the fixing device can be used to drill holes in the fabric of a building or in a beam or the like via the cylindrical unit. This is necessary when the frame screw is to be used in association with steel, concrete and brick and other materials that require a plug in which the fixing device is to be secured. The plug is placed in a pre drilled hole in the fabric of the building, which hole was drilled after the drill bit has been inserted into and through the bore in the cylindrical unit. The plug is inserted into the pre-drilled hole after it has been passed through the bore in the cylindrical unit. The adapter is thereafter arranged in the bore in such a way that it fills the oversized bore and the fixing device is a perfect fit in the inner part of the adapter. It is important that the adapter has a length L1 that is determined by the diameter D1 of the inner part in such a way that together they provide the control of the fixing device that was described above.

In all the above embodiments of the invention, the guiding section is arranged coaxially in relation to the bore. An advantage of this embodiment is that the cylindrical unit has the same centre of rotation as the fixing device, which means that the frame does not move during rotation of the cylindrical unit, when the cylindrical unit is screwed in the direction towards the fabric of the building.

The adapter can be manufactured in plastic and/or metal and/or any other material that can be formed simply and inexpensively according to the any of the described embodiments. A flexible material has the advantage that the frame screw can absorb vibrations through the adapter. However, the adapter must not be so soft that the frame screw is allowed to pivot. The adapter is advantageously arranged so that it forms a press fit with the bore, that is there is a negative clearance. An advantage of this is that the adapter is less likely to change position in the bore as a result of the action of forces from the fixing device. The outside of the adapter is advantageously a shape that corresponds to the shape of the bore. If the first section has an angular cross section, the adapter also has an angular cross section in a corresponding way. An advantage of this is that the adapter is a good fit in the bore and cannot rotate.

According to an embodiment of the invention, the fixing device comprises the adapter so that the adapter is automatically arranged in the bore when the fixing device is inserted into the bore. An advantage of this is that the fixing device and the adapter can be manufactured separately and then assembled so that they can then be sold as a unit. Offering a unit to a consumer is advantageous to the consumer who has then only one item to deal with instead of two. In addition, the installation of the frame screw is simplified, as the adapter is automatically positioned correctly in the bore when the fixing device is put in place.

According to another embodiment of the invention, the fixing device and the adapter are designed in one piece. According to this embodiment, the inner section of the inner flange creates the guiding section. As with the embodiment above, an advantage of this embodiment is that the consumer only has to deal with one unit. In this case, the adapter must be arranged to be able to rotate in the bore so that the fixing device can be secured in the fabric of the building.

The adapter can be designed with a conical outer part, which has the advantage that the adapter is compressed when the head of the fixing device presses the adapter into the first section of the bore. In addition, the bore in the first section can be conical in a corresponding way, in order to apply an even pressure on the outer part of the adapter. The bore in the first section is advantageously designed with the larger part of the cone facing towards the part of the frame screw into which the adapter is to be inserted.

The adapter can be designed with a slot that passes through from the outer part to the inner part. Such a slotted adapter has the advantage that the adapter can be screwed onto a fixing device comprising a threaded outer part with threads that have a larger diameter than the supporting section of the fixing device, as a result of the slot expanding and widening the inner part of the adapter in such a way that the threads can fit into the inner part. The supporting section is located between the head and the outer threaded part. In addition, instead of being provided with a slot, the adapter can be divided in two, for the same reason.

In addition, the fixing device can be threaded the whole way from the head to its outer tip. The threaded part then comprises the supporting section of the fixing device. If the adapter is so soft that the threads create imprints in the adapter, the outer part of the adapter must have a dimension that allows the adapter to rotate in the bore, so that the position of the frame screw in the frame can be adjusted.

The guiding section mentioned in connection to the adapter above can also be formed by the inner surface of the inner flange. The flange can thus have the dimension given above in connection to the description of the adapter. In addition, the inner surface of the adapter can not, together with inner surface of the inner flange, form the guiding section.

BRIEF DESCRIPTION OF DRAWINGS

The invention will be described below in association with a number of drawings, in which:

Figure 1 shows schematically a casing of a frame screw according to the present invention;
Figure 2 shows schematically a cross section along the line A-A in figure 1 of a casing of a frame screw according to a first embodiment of the invention;
Figure 2a shows schematically a cross section along the line A-A in figure 1 of a casing of a frame screw according to a second embodiment of the invention;
Figure 2b shows schematically a cross section along the line A-A in figure 1 of a casing of a frame screw according to a third embodiment of the invention;
Figure 2c shows schematically a side view according to an embodiment of a casing according to any of the figures 1-2b;
Figure 2d shows schematically a side view of figure 2c seen from the other side of the casing;
Figure 2e shows schematically a side view according to an embodiment of a frame screw according to any of the figures 1-2b;
Figure 2f shows schematically a side view according to an embodiment of a frame screw according to any of the figures 1-2b;
Figure 2g shows schematically a side view of only a background representation of a frame screw;
Figure 3 shows schematically a frame screw comprising a fixing device and a casing according to any of figures 1-2b;
Figure 4 shows schematically a frame screw according to previously-known technology (prior art) after installation;
Figure 5 shows schematically a casing and an adapter of a frame screw according to an embodiment of the invention;

Figure 6 shows schematically a frame screw comprising a fixing device and a casing according to figure 5;
Figure 7 shows schematically a frame screw according to figure 6 after installation;
Figure 8 shows schematically a frame screw comprising a fixing device, a casing and an adapter according to an embodiment of the invention;
Figure 9 shows schematically a frame screw comprising a fixing device, a casing and an adapter according to an embodiment of the invention;
Figure 10 shows schematically a frame screw comprising a fixing device, a casing and an adapter according to an embodiment of the invention;
Figure 11 shows schematically a frame screw as shown in figure 10 but with an alternative design for the adapter;
Figure 12 shows schematically a frame screw comprising a fixing device, a casing and an adapter according to an embodiment of the invention;
Figure 13 shows schematically a frame screw comprising a fixing device, a casing and an adapter according to an embodiment of the invention;
Figure 14 shows schematically a frame screw comprising a fixing device, a casing and an adapter according to an embodiment of the invention;
Figure 15 shows schematically a frame screw comprising a fixing device, a casing and an adapter according to an embodiment of the invention;
Figure 16 shows schematically a frame screw comprising a fixing device, a casing and an adapter according to an embodiment of the invention;
Figure 17 shows schematically a frame screw comprising a fixing device, a casing and an adapter according to an embodiment of the invention, and
Figure 18 shows schematically a frame screw comprising a fixing device, a casing and an adapter according to an embodiment of the invention.

MODES FOR CARRYING OUT THE INVENTION

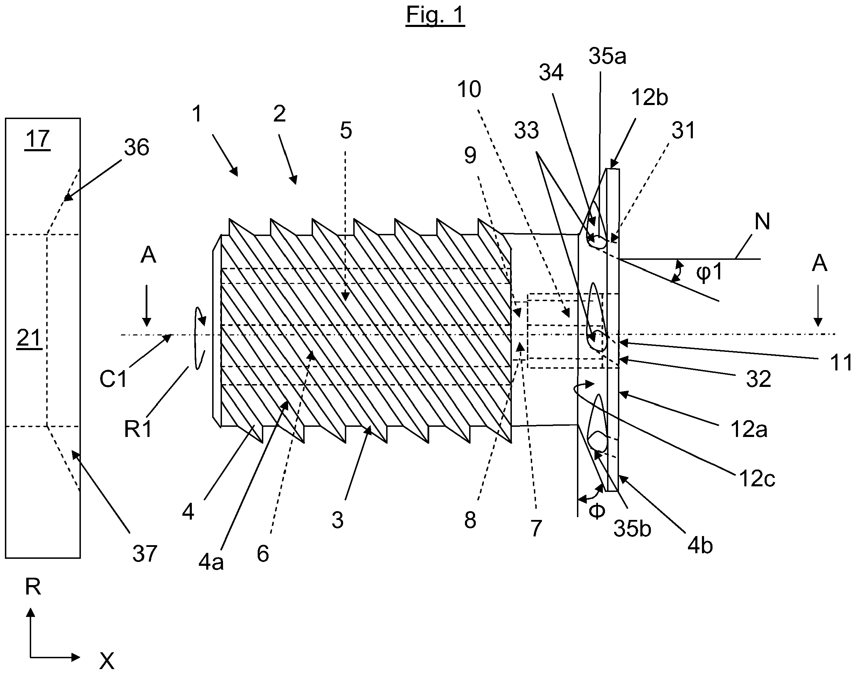

Figure 1 shows schematically a casing 2 of a frame screw 1 according to the invention. The casing 2 is in the form of a cylindrical unit 3 comprising an outer casing 4a and an outer flange 4b. The casing is consequently divided in the longitudinal extension, that is in the axial direction X, by means of the outer casing 4a, and the outer flange 4b. In the axial direction, the outer casing 4a comprises at least partially threads 4 such that the casing 2 can be screwed into a workpiece 17 comprising a hole 21. The workpiece can be made of wood, metal, or polymeric materials, for example plastic. The shape of the threads, that is, pitch, height, width, and threaded share of the length of the outer casing, can be varied depending on the material in which the frame screw shall be used. The workpiece is normally a frame in a door assembly or a frame in a window assembly.

The cylindrical unit 3 is designed with a bore 5 that passes through in an axial direction X. A first section 6 of the bore 5 is designed with a cross section in a radial direction R that is suitable for the insertion of a tool, and can consist, for example, of a triangular, four-sided, five-sided, hexagonal or other suitable shape that provides a good engagement between the tool and the first section 6. In a second section 7 in the bore 5, there is an inner flange 8 comprising a circular inner section that creates a guiding section 9 and a specially-designed matching-fit section 10. The matching-fit section 10 is designed to receive a tool (not shown) with a corresponding shape as the matching-fit section 10, for example triangular, four-sided, five-sided, hexagonal or other suitable shape that provides a good engagement between the tool and the matching-fit section 10. After the matching-fit section 10 the bore 5 can comprise a third section 11, which is designed to facilitate the insertion of a tool to be fitted into the second section 10. The third section 11 can be omitted, in which case the second section extends from the inner flange 9 to an end face 12a of the casing 12.

The casing 2 is arranged to be screwed into the above mentioned workpiece by means of tool in the matching-fit section 10, whereby the casing 2 is arranged to rotate in a direction of rotation R1 around a central axis C1, which extends in the axial direction X. In the figure, the direction of rotation R1 is defined as a clockwise rotation because the cylindrical unit 3 is right-threaded. The direction of rotation R1 is consequently anticlockwise with a left-threaded cylindrical unit 3.

The outer flange 4b comprises the outer end face 12a, which is radially limited by an edge part 12b, and a machining surface 12c. The end face 12a has a spread in the radial direction R greater than the spread in radial direction R of the outer casing 4a. The machining surface 12c has an extension from the edge part 12b to the outer casing 4a. The machining surface 12c being arranged at an angle Φ relative to the normal to the outer casing 4a, which depends on a number of factors, which will be described below.

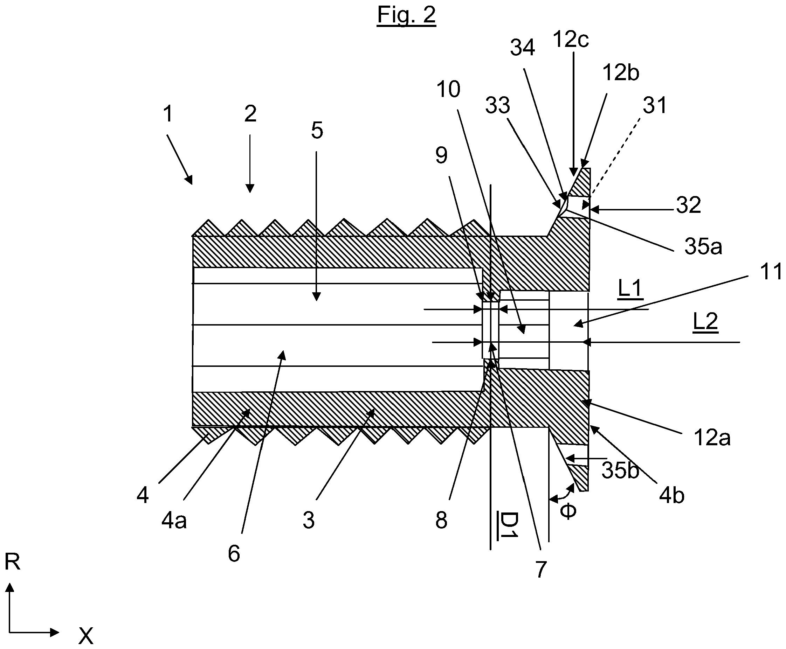

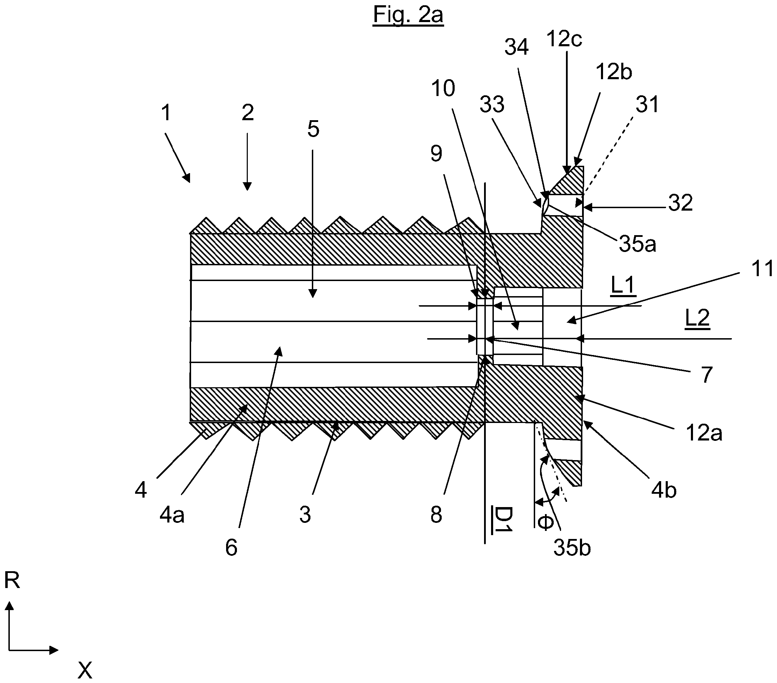

The machining surface 12c can be conical, that is, comprising straight lines, or can be convex, that is, comprising bent lines (see figure 2a). An advantage having a conical surface compared with a convex is that the amount of material which must be evacuated when the machining surface 12c operates on a workpiece is minimal.

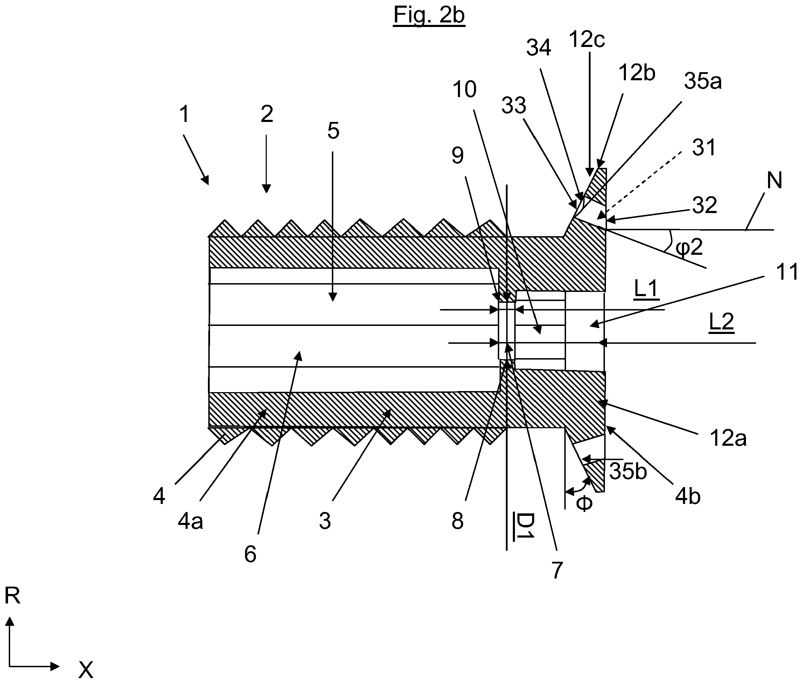

Figure 1 shows that the outer flange 4b comprises through holes 31, which extend from the end face 12a through the outer flange 4b to the machining surface 12c. First openings 32 for respective holes 31 are thus located in the end face 12a, and corresponding second openings 33 are located in the machining surface 12c. The holes 31 are each arranged in the outer flange 4b at an angle $\varphi1$ and $\varphi2$ (shown in figure 2b) relative to a normal N to the end face 12a. The angle $\varphi1$ is measured to the normal N substantially in the direction of rotation, that is, in a direction that substantially coincide with a normal to radius of the end face 12a. The angle $\varphi2$ is

measured to the normal N substantially in the radial direction R, that is, in a direction which substantially coincides with the radius of the end face 12a. The angles $\varphi1$ and $\varphi2$ consequently being substantially perpendicular to each other in the plane of the first end face 12a.

In figure 1 is showed that the machining surface 12c comprises recesses 34 arranged with an extension substantially in direction of rotation R1 of the casing 2. Each recess 34 extend in the direction of rotation R1 from the front edge 35a of the second opening 34 to a position before the rear edge 35b of the next second opening 34. The length of the recess and its geometrical form depends on a number of factors, namely the angles $\varphi1$, $\varphi2$ and Φ, and the material of the workpiece, on which the sleeve 2 shall be used.

The angle $\varphi1$ depends on the material of the workpiece and can vary between 0° to 70°. The angle depends among other things on the material of the sleeve, since the edge part 12b is not allowed to bend due to excessive weakening of the material when the holes 31 are produced. Experiments have shown good results for wood when $\varphi1$ is 0°- 45°, and particularly good results when $\varphi1$ is 5°-10°.

The angle $\varphi2$ depends on the material of the workpiece and can vary from 0° to about ±30°. The angle depends among other things on the material of the sleeve, since the edge part 12b is not allowed to bend due to excessive weakening of the material when the holes 31 are produced. Experiments have shown very good results for wood when $\varphi2$ is about 0°.

The angle Φ depends on the amount of material to be evacuated. The smaller the angle, the less material to evacuate. The angle Φ depends also the ability of the cutting edge 35 to operate. The bigger the angle, the better can the cutting edge 35 operate. Both these factors depend on the material of the workpiece 17. A soft material give the possibility of a big angle Φ since the large amount of material to be evacuated via the holes 31 easily can be machined by the cutting edge. A hard material give wish of evacuation of as little material as possible, that is, a small angle, but the cutting edge 35 must then be able to operate sharply. The angle Φ shall consequently be optimised depending on choice of workpiece 17 material. The angle Φ shall also be optimised with respect to the pitch angle of the threads 4, that is, number of threads per length unit, since the pressure of the machining surface 12c on the material of the workpiece 17 depends on the relationship between pitch angle and the angle Φ, and the amount of material to be evacuated. The sleeve moves a longer distance in the axial direction with a high pitch angle than with a low pitch angle. With a high pitch angle, more material must consequently be transported per time unit through the holes 31 in order to avoid too high pressure, such that the sleeve 2 can no longer be screwed in. Here is a wish that as little material as possible should be evacuated and the keeping the angle Φ small. The amount of material which can be evacuated though the holes 31 depends also on the diameter of the holes 31, and the angles $\varphi1$ and $\varphi2$. The angles $\varphi1$ and $\varphi2$ determines the ability of the cutting edge 35 to machine the material, since the angles $\varphi1$ and $\varphi2$ define the angle of action of the cutting edge 35 on the material in the workpiece 17. The ability to machine the material depends also on the form of the recesses 34, that is, depth and length, and the angle between the recesses 34 and the other openings 33. Experiments have shown very good results for wood when $\Phi$ is about 10°-50°, and particularly good results when $\Phi$ is about 25°-35°. Having these angles of $\Phi$, it has shown that the machining surface produces good results without the occurrence of the above mentioned recesses 34 in the machining surface 12c.

The rear edge 35b forms a cutting edge (hereinafter called the cutting edge 35b), which is intended to machine, for example by means of cutting, reaming, scraping, or other suitable method of machining, the workpiece 17 on which the sleeve 2 is used. The sleeve is during installation in the workpiece 17 arranged to be screwed into the hole 21, such that the machining surface 12c machine the workpiece 21, wherein the cutting edge 35b machine the material of the workpiece such that material come loose from the workpiece and being transported out via the holes 31.

In an embodiment of the invention, each recess 34 extends so far towards the corresponding hole 31 that the front edge 35a is located lower than the rear edge 35b. The second opening 33 lies consequently not in one plane, but has a surrounding edge with varying height in the axial direction, and where the rear edge 35b is higher than the front edge 35a. The recesses 34 provide an improved characteristic of the machining surface at small angles $\Phi$.

The recesses are not necessary when the angle $\Phi$ is about 20°- 45°, but the rear edge 35b of the second opening 33 forms despite this a cutting edge, because the machining surface 12c operates in spiral-formed movement when the casing 2 is screwed into the workpiece. The spiral-formed movement 17 appears due to the threads 4 in the outer casing 4a.

The difference between the radial extension of the end face 12a and the radial extension of the outer casing 4a depends on a number of factors: namely the number of holes 31; the size of the holes 31, the angles $\varphi1$, $\varphi2$ and $\Phi$, and the material of the workpiece, on which the sleeve 2 shall be used; and the choice of the material thickness between the edge part 12b and the holes 31. In figure 1 has the edge part 12b an extension in the axial direction X, that is, a thickness, but the machining surface 12c can be arranged to meet the end face 12a without any edge part 12b, that is, the thickness of the edge part 12b is zero, or at least a very thin edge part. The edge part must however have a thickness which allows the edge part 12b to resist bending when the sleeve is screwed into the workpiece 17 and the edge part contacts the workpiece. The choice of material for the sleeve 2 and the material of the workpiece 17 are consequently decisive for the thickness of the edge part 12b. The edge part 12b is circular in figure 1, which has shown being advantageous when the sleeve 2 is screwed into the workpiece 17, such that the edge part 12b lies against the workpiece 17 and machines the workpiece 17, because the material does not splinter, at least when using wood. When the holes evacuate material from below the machining surface, can the edge part 12b compress the material of the workpiece 17 to an even and circular depression. The circular edge part 12b together with the distance between the holes 31 is a parameter to take in consideration to achieve a depression without splintering.

Figure 1 shows with a broken line 36 in the workpiece 17 that the workpiece 17 comprises a recess 37. The recess is a result of the sleeve having been screwed into the hole 21 in the workpiece 17, wherein the machining surface 12c has machined away material from the workpiece 17 by means of the cutting edges, which material was subsequently evacuated from the workpiece 17 via the holes 31.

In figure 1 is shown that the outer flange 4b comprises seven holes 31, but the outer flange can comprise less as well as more holes 31, for example one hole, or 14 holes in total, depending on the material in the outer flange 4b, the sizes of the holes 31, the sizes of the recesses 34, $\varphi1$, $\varphi2$ and $\Phi$, and the material of the workpiece 17, on which the sleeve 2 shall be used. A compromise might be needed with respect to the number of holes, but the aim is to provide favourable machining ability and material evacuation away from the workpiece 17, and a strength of the outer flange 4b, which allows machining without bending of the outer flange. The holes do not have to be round, but can be oval or of any other suitable geometry.

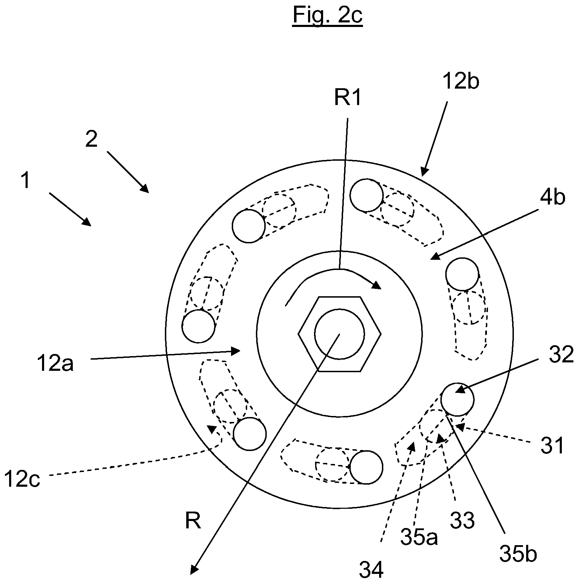

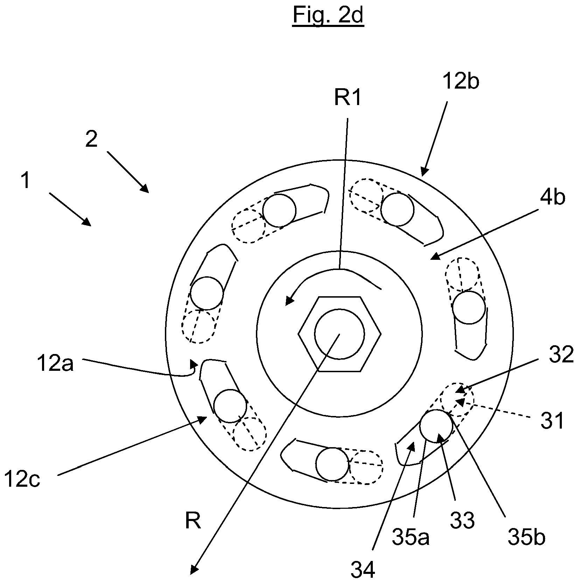

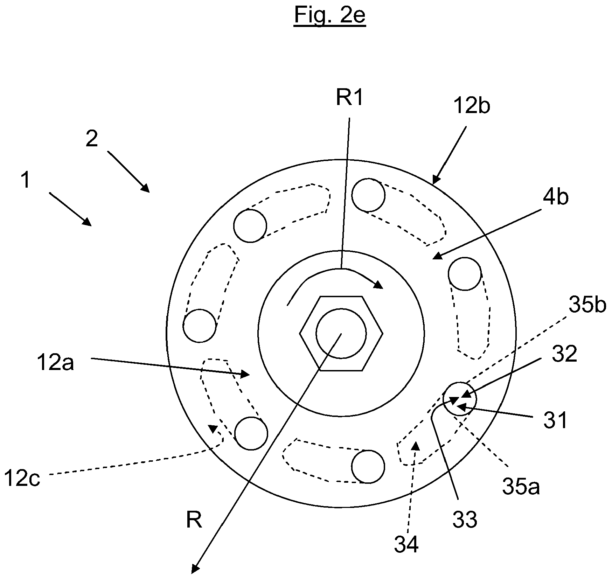

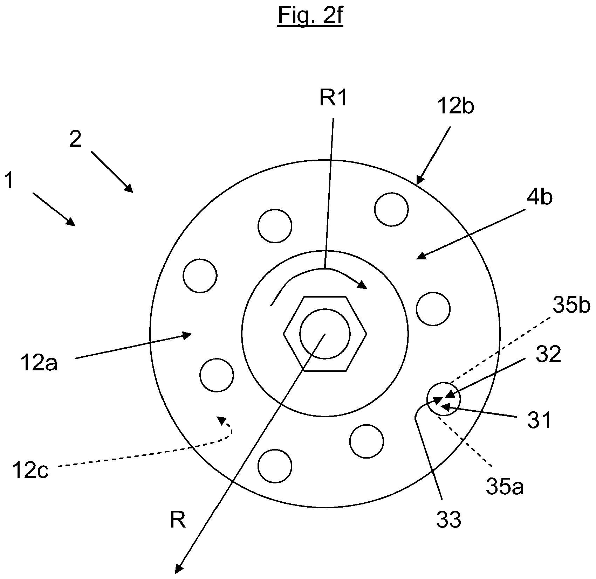

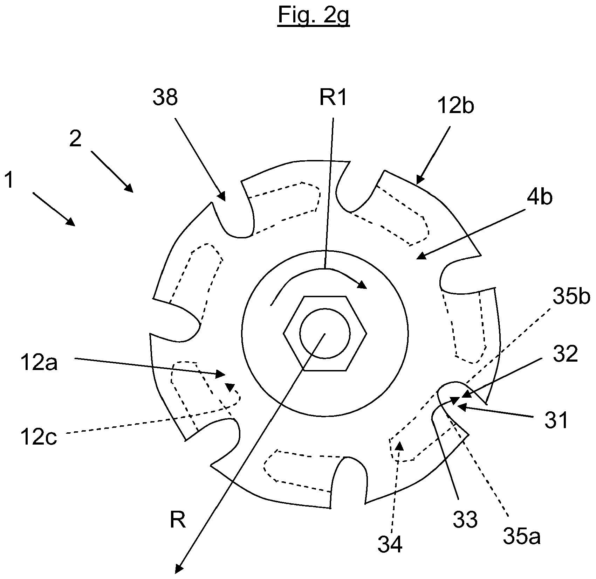

Figure 2 shows schematically a cross section along the line A-A in figure 1 of a casing of a frame screw according to first embodiment of the invention. In figure 2 is shown that the machining surface 2c has a substantially conical geometry, that is, straight cross-sectional profiles.

Figure 2 shows that, after the matching-fit section 10, the bore 5 comprises a third section 11 with an essentially circular cross section. Figure 2 shows that L1 = the length of the guiding section 9 in an axial direction; and L2 = the distance between the guiding section 9 and the end face 12a of the cylindrical unit 3. L2 comprises the length L1 of the guiding section. D1 = the diameter of the guiding section 9.

Figure 2a shows schematically a cross section along the line A-A in figure 1 of a casing of a frame screw according to second embodiment of the invention. In figure 2 is shown that the machining surface 2c has a substantially convex geometry, that is, bent cross-sectional profiles. The machining surface 2c can also be convex, or a mixture of the convex, concave and conical geometry.

Figure 2b shows schematically a cross section along the line A-A in figure 1 of a casing of a frame screw according to third embodiment of the invention. The angle $\varphi2$ is measured to the normal N substantially in the radial direction R, that is, in a direction which substantially coincides with the radius of the end face 12a. The angle $\varphi2$ depends on the material of the workpiece and can vary from 0° to about $\pm30°$. The angle depends among other things on the material of the sleeve, since the edge part 12b is not allowed to bend due to excessive weakening of the material when the holes 31 are produced. Experiments have shown very good results for wood when $\varphi2$ is about 0°. In figure 2b, the angle $\varphi2$ is positive and about 25°, but the angle can vary as previously mentioned.

Figure 2c shows schematically a side view according to an embodiment of a casing according to any of the figures 1-2b. The above mentioned description should be applied on the figures 2c-2f. The angle $\varphi1$ is positive in figure 2c as in figure 1, and the angle $\varphi2$ equals zero.

Figure 2d shows schematically a side view of figure 2c seen from the other side of the casing.

Figure 2e shows schematically a side view according to an embodiment of a frame screw according to any of the figures 1-2b. The angle $\varphi1$ in figure 2e equals zero, and the angle $\varphi2$ equals zero.

Figure 2f shows schematically a side view according to an embodiment of a frame screw according to any of the figures 1-2b. The angle $\varphi1$ in figure 2f equals zero, and the angle $\varphi2$ equals zero. In figure 2 is shown that the machining surface 2c lacks recesses 34, but this is only possible when the angle $\Phi$ is greater than zero. The machining surface 2c can lack recesses 34 in all the embodiments described in connection to figures 1-2e provided that the angle $\Phi$ is greater than zero. The holes 31 are displaced in the radial direction R in figure 2f. The holes 31 can be displaced in the radial direction R in all embodiments described in connection to figures 1-2e.

Figure 2g shows schematically a side view of only a background representation of a frame screw. The angle $\varphi1$ in figure 2g equals zero, and the angle $\varphi2$ equals zero. In figure 2g is shown that parts 38 of the edge part 12b have been removed in connection to the holes 31.

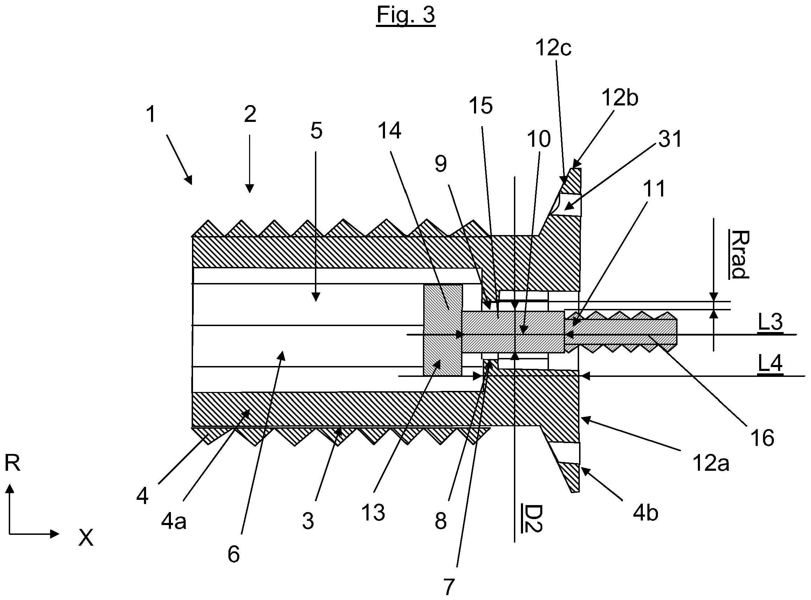

Figure 3 shows schematically a frame screw comprising a fixing device 13 and a casing 2 according to figure 2. The fixing device 13 can move freely in the bore 5, both in a rotational direction R1 and in an axial direction X. The fixing device 13 comprises a head 14, a supporting section 15 and a threaded part 16. L3 = the length of the supporting section 15 in an axial direction along the central axis of the fixing device 13. L4 = the distance between the head 14 of the fixing device and the end face 12a of the cylindrical unit 3 (excluding the head 14) along the central axis of the fixing device 13, when the head 14 of the fixing device 13 is in contact with the inner flange 8. D2 = the diameter of the supporting section 15. Rradial = the maximal radial movement of the central axis of the fixing device 13 for given L1-L4, D1 and D2 in relation to the central axis of the cylindrical unit 3, when the fixing device 13 is moved parallel to the centre line of the bore 5 in a radial direction R.

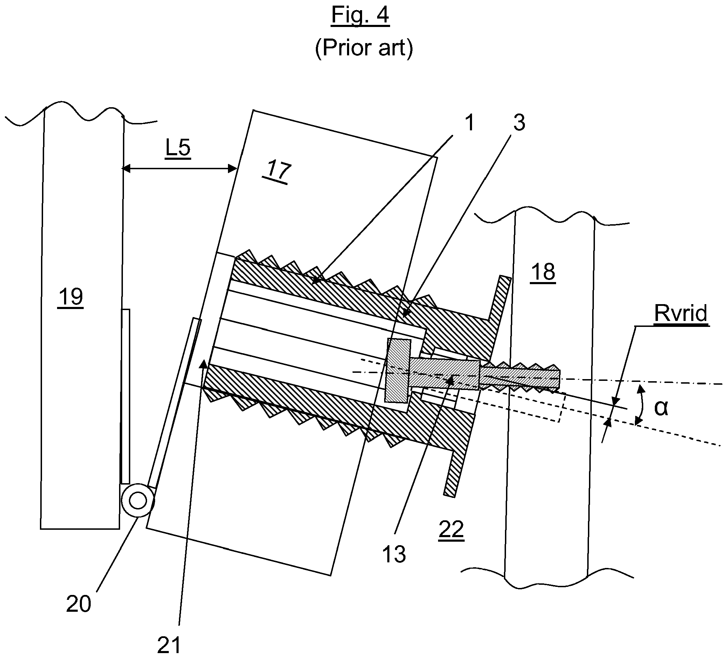

Figure 4 shows schematically a frame screw 1 according to figure 3 after installation in a frame 17 and a building 18. Figure 2 shows that a door 19 is attached to the frame by hinges 20. The fixing device 13 comprised in the frame screw 1 is designed to be fixed into the building 18 and thereby create a fixing between the frame 17 and the building 18. The fixing device 13 is fitted into the bore 5 in such a way that the head 14 of the fixing device 13 and a part of the fixing device 13 that extends from the head 14 are hidden in the bore 5, but the larger part of the fixing device 13 protrudes from the cylindrical unit 3. The head 14 of the fixing device 13 is designed to make contact with the inner flange 8, during installation of the frame 17, by means of the pressure when the fixing device 13 is screwed into the building, as described below.

Figure 4 shows that a hole 21 has been made in the frame 17 into which the cylindrical unit 3 is screwed via the external threads 4 and using the tool that has been arranged in the matching-fit section 10 in the direction towards the door 19. The cylindrical unit 3 is initially screwed into the hole 21 in such a way that essentially the whole cylindrical unit 19 is hidden in the hole.

The frame 17 is thereafter arranged in an opening 22 arranged in the fabric of the building 18. The cylindrical unit 3 is thereafter screwed in the direction towards the fabric of the building 18 using a tool arranged in the first section 6 until the end face 12a is in contact with the fabric of the building 18. The fixing device 13 is thereafter inserted into the bore from the inside of the frame 17, that is from the side of the frame 17 towards which the door 19 faces, after which the fixing device 19 is screwed into the fabric of the building 18 and creates a tension fixing between the frame screw 1 (and thereby the frame) and the fabric of the building 18.

Figure 4 illustrates a well known problem, namely that the frame 17 can move in relation to the fabric of the building 18, as the fixing device 13 can move freely in a radial direction in relation to the cylindrical unit 3. The problems associated with such changes in position have already been discussed above.

Rpivot = the maximal pivoting movement of the central axis of the fixing device for given L1-L4, D1 and D2 in relation to the central axis of the cylindrical arrangement.

$$Rradial = (D1-D2)/2$$

$\alpha$ = arctangents $((D1-D2)/L1)$ = the angle between the central axis of the fixing device and the central axis of the guiding arrangement.

$$Rpivot = L4 \times tangens (\alpha) \times 1/2$$

$$Rpivot = L4x(D1-D2)/L1x1/2$$

It should be noted that, for a pivoted fixing device, Rpivot according to the above is an approximation. L4 is then measured when the central axis of the fixing device lies parallel to the central axis of the guiding device. The point on the central axis of the fixing device that constitutes the measurement point for Rradial and Rpivot is taken in the plane that coincides with the end surface of the cylindrical unit. In the event of pivoting, the same measurement point will be located slightly inside the said plane and the distance from the measurement point to the plane constitutes the approximation. The approximation is valid for small values of α.

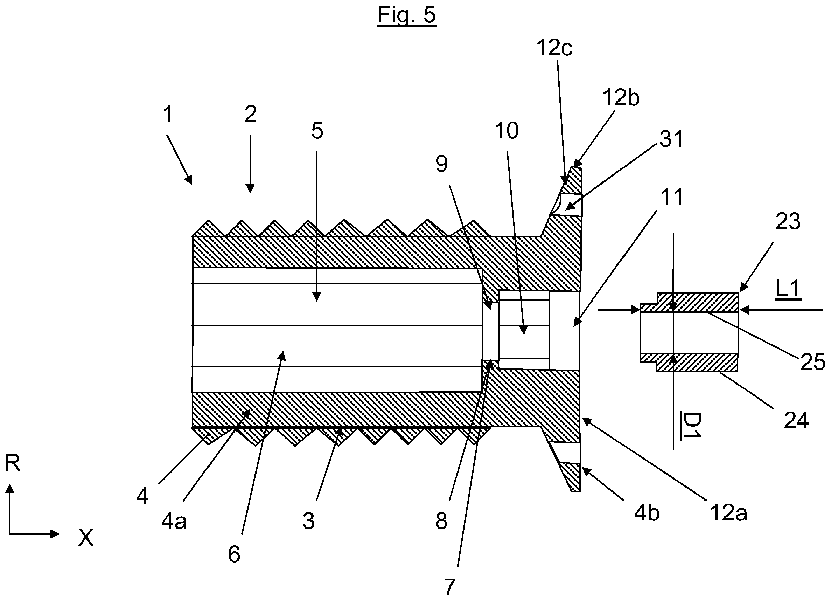

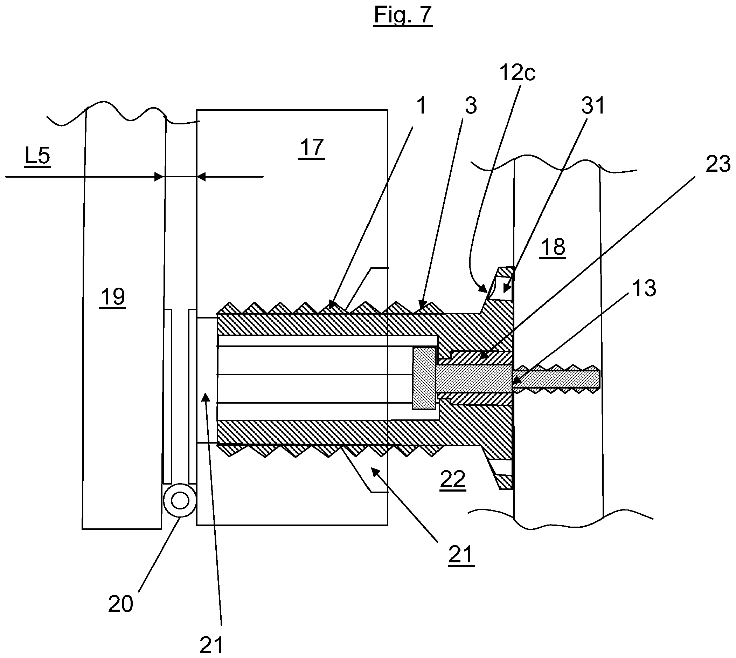

Figure 4 shows a length L5 that indicates an increase in the distance between the frame 17 and the door 19 on account of the frame having pivoted. The increase in the distance is comparable with the distance L5 between the frame 17 and 19 when the frame has not pivoted. The latter case is illustrated in figure 7. The pivoting of the frame and the increase in L5 on the hinge side corresponds to a reduction in the distance between the frame 17 and the door 19 on the opposite side of the door. Figure 5 shows that L5 becomes smaller in the direction towards the hinges 20, which indicates a pivoting of the frame 17. If the frame had not pivoted, L5 would not have become smaller.

Figure 5 shows schematically a casing 2 of a frame screw 1 according to an embodiment of the invention. The frame screw 1 comprises here an adapter 23 comprising an external part 24 with a shape that corresponds to the internal dimension of the matching-fit section 10 and the internal dimension of the third section 11, and an inner part 25 with an inner surface with corresponding dimensions to those of the inner surface of the guiding section 9 in the inner section of the inner flange 8. The inner part 25 of the adapter 23 thus comprises a part of the guiding section 9 of the frame screw 1 and thereby increases the length of the guiding section 9 in an axial direction. An advantage of such an arrangement is that the tolerances of the guiding section in relation to the supporting section of the fixing device can be increased, that is the clearance between the fixing device and the guiding section can be greater with increased length, while maintaining radial freedom of movement.

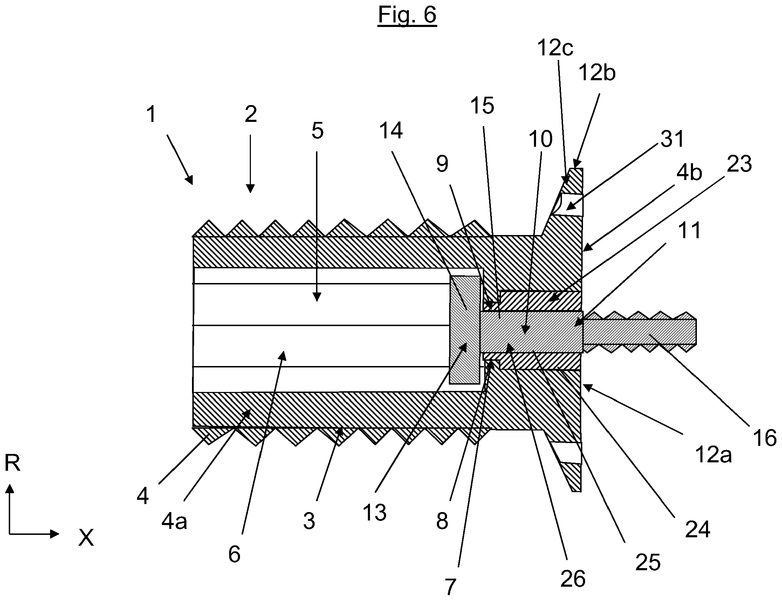

Figure 6 shows schematically a frame screw 1 comprising a fixing device 13 and a casing 2 according to figure 5. Figure 6 shows the adapter 23 fitted in the matching-fit section 10 and the fixing device 13 arranged in the casing 2 in the bore 26 that is created by the inner surface of the inner flange 8 and the inner surface of the adapter 25. The bore 26 that is created comprises the guiding section 9 of the frame screw 1 according to the invention. Figure 6 shows that the supporting section 15 of the fixing device 13 is the same length as the guiding section 9.

Figure 7 shows schematically a frame screw according to figure 6 after installation in a frame 17 and in the fabric of a building. A comparison is to be made here with the previously-known frame screw in figure 4.

L3 should always be at least equal to L1 as, for example, a screw with a smaller L3 would mean that the threaded section of the screw, that can have a different diameter to that of the supporting section 15, would be within the guiding arrangement 9 and could change the conditions governing the freedom of movement of the fixing device 13.

According to the formulae above, it can be seen that when L1 increases, Rpivot and α decrease, but that Rpivot increases with the increase in L4. In the first instance of the first embodiment, L1 and L3 must thus be determined by L4 in order for the maximal permitted value of Rpivot not to be exceeded.

In figure 7, it is the case that L1 = L2 = L3 = L4 which means that Rpivot = Rradial with the advantages that were discussed above. This does not affect the angle α, but an increase in L1 reduces the angle α and reduces the possibility of incorrect positioning of the frame 17.

Figure 7 shows that L1 is of such a length and D1 and D2 are so determined in relation to each other that the frame 18 is not given any more room to pivot in such a way as is shown in figure 4. Figure 7 also shows that L5 is essentially constant over the whole part that constitutes the space between the frame 17 and the door 19.

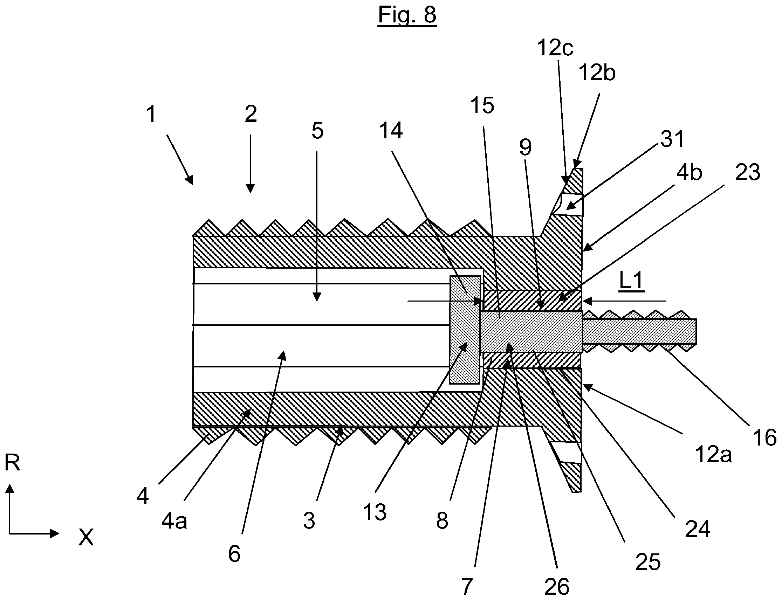

Figure 8 shows schematically a frame screw 1 comprising a fixing device 13 and a casing 2 according to an embodiment of the invention. The casing comprises here an inner flange 8 that extends the whole way to the end face 12a of the cylindrical unit 3. The adapter 23 constitutes here the guiding section 9 that consists of the inner surface of the inner part 25 of the adapter 23. The adapter 23 comprises an outer part 24 with a shape that corresponds to the inner section of the inner flange 8. The bore 26 that is created corresponds to the guiding section 9 precisely as in figure 6 and, in figure 8, has such a length and such a tolerance in relation to the supporting section 15 of the fixing device 13 that the radial freedom of movement Rradial of the fixing device 13 is limited in the same way as with the use of the adapter 23 in figures 5-7.

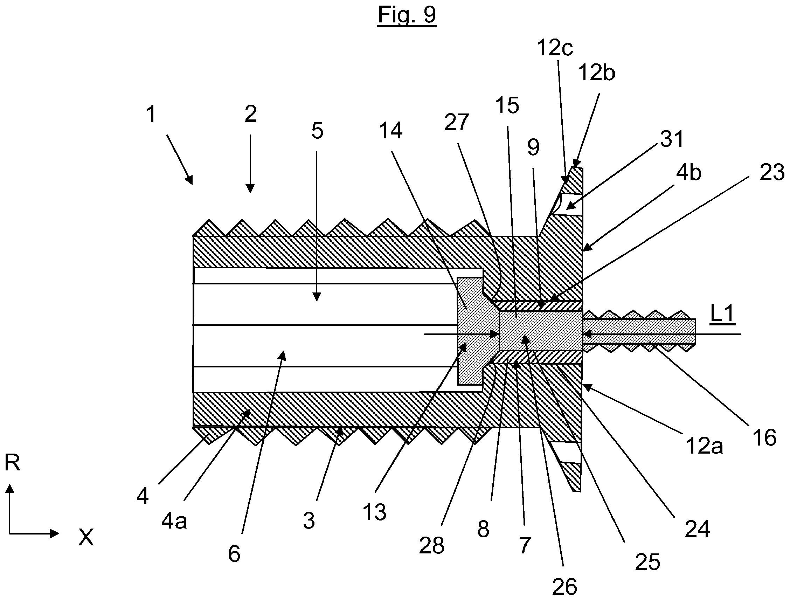

Figure 9 shows schematically a frame screw 1 comprising a fixing device 13 and a casing 2 according to an embodiment of the invention. As in figure 8, the casing comprises an inner flange 8 that extends the whole way to the end face 12a of the cylindrical unit 3. The adapter 23 constitutes the guiding section 9 that consists of the inner surface of the inner part 25 of the adapter 23. The adapter 23 comprises an outer part 24 with a shape that corresponds to the inner section of the inner flange 8. Figure 9 shows that the inner flange 8 and the adapter comprise specially-modified sections 27 that together form a truncated cone. The head 14 of the fixing device has a corresponding section 28. The fixing device 13 is thus fitted into the guiding section 9 in such a way that the specially-modified part 28 of the head 14 is fitted into the modified section 27 of the inner flange 8 and the supporting section 15 of the fixing device 13 is fitted into the guiding section 9. An advantage of the embodiment is that the specially-designed section 27 of the inner flange 8 forms a part of the guiding section 9 and guides the specially-designed part 28 of the fixing device 13 in such a way that the movement of the fixing device 13 in relation to the cylindrical unit 3 is minimized. This is due to the fact that, during installation of the frame 17, the head 14 of the fixing device is in contact with the inner flange 8 by means of the pressure when the fixing device is screwed into the building 18 as described above.

In another embodiment of the invention, it is only the inner flange 8 that has specially-modified sections 27 in the form of a truncated cone. The adapter 23 can thus have straight end sections or angled end sections.

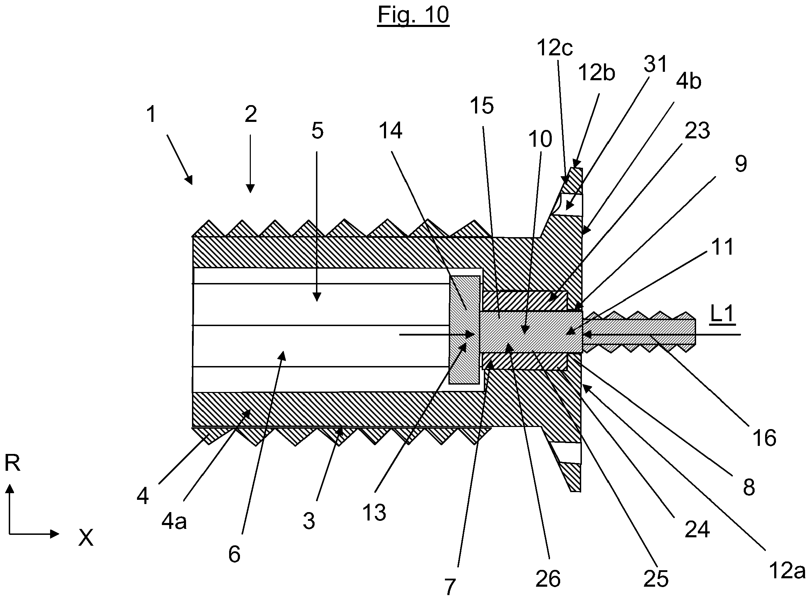

Figure 10 shows schematically a frame screw 1 comprising a fixing device 13, a casing 2 and an adapter 23 according to an embodiment of the invention. Figure 10 shows that, in the axial direction, the bore 5 comprises a sequence of a first section 6, a second section 7 and a third section 11. Figure 10 shows that the first section 6 is designed in such a way that a fixing device 13 with a head 14 can be arranged to rotate in the first section of the bore 5. Figure 10 shows that the second section 7 comprises a specially-modified matching-fit section 10 and that the third section 11 comprises an inner flange 8 comprising an inner section that creates a guiding section 9. The matching-fit section 10 is here located between the first section 6 and the guiding section 9. The guiding section 9 is located between the matching-fit section 10 and an end face 12 of the cylindrical unit 3. The end face 12a has an extent in a plane in the radial direction. The matching-fit section 10 is intended to receive an adapter 23 with a corresponding shape to that of the matching-fit section 10, for example with a cross section that is round, triangular, four-sided, five-sided, hexagonal, or other geometrical shape. The adapter 23 comprises an outer part 24 with a shape that corresponds to that of the matching-fit section 10 and an inner part 25 with corresponding dimensions to those of the guiding section 9 in the inner flange 8. Together with the inner section, the inner part 25 of the adapter 23 creates an elongated guiding section 9 as a result of a bore 26 having been created. The elongated guiding section thus forms a part of guiding section 9 of the frame screw 1 and thereby increases the length of the guiding section 9 in the axial direction.

An advantage of such an arrangement is that the tolerances of the guiding section 9 in relation to the supporting section 15 of the fixing device 13 can be increased, that is the clearance between the fixing device and the guiding section can be larger with increased length while maintaining the radial freedom of movement.

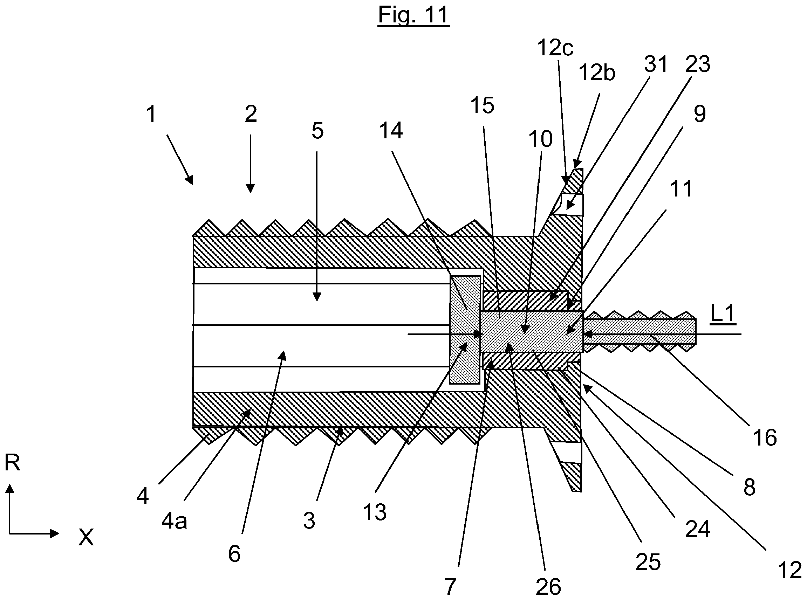

Figure 11 shows an alternative embodiment in which the adapter 23 is designed to fit into both the matching-fit section 10 and the inner section of the inner flange. The inner part 25 of the adapter 23 thus forms the whole guiding section 9 of the frame screw 1 and can be adapted to the required tolerances. Increased tolerances enable a less expensive method to be used for manufacturing the frame screw and, in addition, previously-known frame screws can be converted to create a better and more robust frame screw 1. As in figure 2, figure 11 shows that the second section comprises the matching-fit section 10 and that the inner flange 8 is arranged in the third section.

Yet another advantage of the embodiments shown in figures 10 and 11 is that the adapter is not liable to be pushed out of the bore 5 when the fixing device is inserted into the bore 45, as the inner flange 8 forms a part that prevents further movement of the adapter 23. As the adapter 23 cannot be pushed out of the bore 5 of the cylindrical unit 3, the tolerances can be small between the supporting section 16 and the bore 26 that was created, that is between the supporting section 15 and the guiding section 9.

The inner section of the inner flange 8 can be circular or can have a cross section in accordance with the matching-fit section described in association with figure 1 that permits the insertion of a tool for rotation of the cylindrical unit 3 during installation in a frame.

The adapter 23 can be manufactured in plastic and/or metal and/or any other material that can be formed simply and inexpensively according to the above.

An advantage of a relatively soft adapter 23 is that the fixing device 13 can form the adapter 23 by exerting an axial pressure when the fixing device is arranged in a receiving unit, for example in the form of a wall. By "form" is meant here that the shape of the adapter is changed as a result of pressure. The adapter can, for example, be slightly longer than the bore 5 which means that the protruding part of the adapter is pressed into the bore when the head 14 of the fixing device 13 is caused to exert a pressure on the adapter. When the protruding part is pressed into the bore 5, the quantity of material in the bore is increased, which means that the guiding section becomes narrower, which, in turn, means that the freedom of movement of the fixing device is reduced.

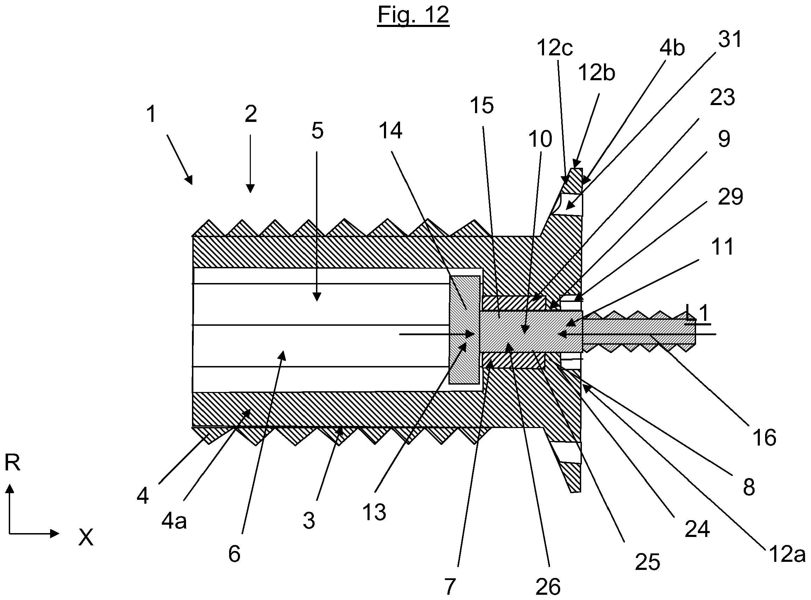

Figure 12 shows schematically a frame screw 1 comprising a fixing device 13, a casing 2 and an adapter 23 according to an embodiment of the invention. The frame screw shown in figure 12 is identical to the frame screw shown in figure 10 with the advantages that are mentioned in association with this, but with the following differences. The frame screw in figure 12 has a second matching-fit section 29 located between the inner flange 8 and the end face 12a of the cylindrical unit 3. As with the first matching-fit section shown in figure 5, the second matching-fit section 29 can be arranged to receive a tool for rotation of the cylindrical unit 3 during installation in a frame.

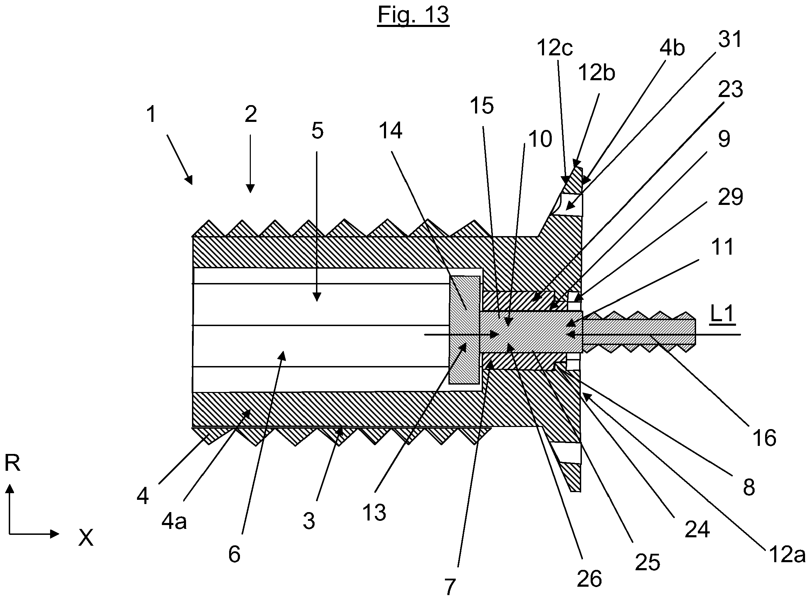

Figure 13 shows schematically a frame screw 1 according to an embodiment of the invention. The frame screw shown in figure 13 is identical to the frame screw 1 shown in figure 11 with the advantages that are mentioned in association with this, but with the following differences. The frame screw in figure 13 has a second matching-fit section 29 located between the inner flange 8 and the end face 12a of the cylindrical unit 3. As with the first matching-fit section shown in figure 5, the second matching-fit section 29 can be arranged to receive a tool for rotation of the cylindrical unit 3 during installation in a frame.

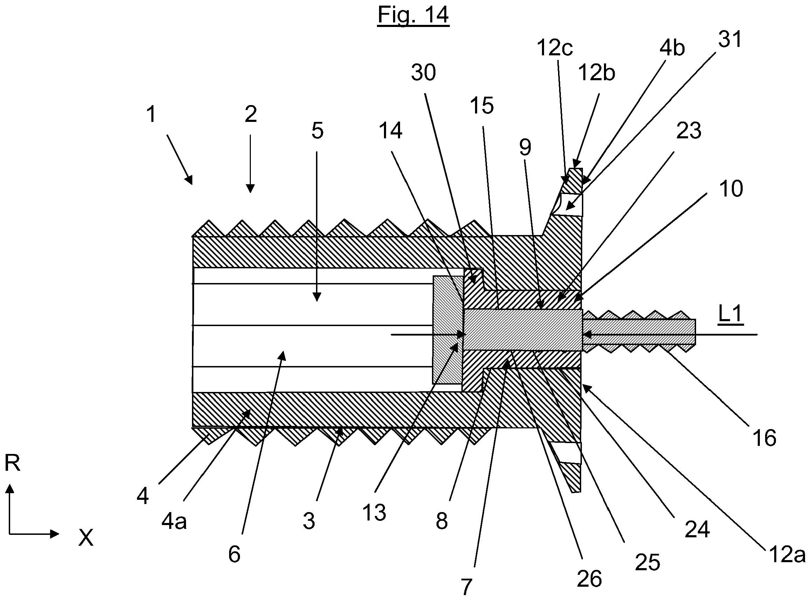

Figure 14 shows schematically a frame screw 1 comprising a fixing device 13, a casing 2 and an adapter 23 according to an embodiment of the invention. The frame screw 1 shown in figure 14 is identical to the frame screw 1 shown in figure 8, but with the difference that the adapter 23 comprises a second inner flange 30 intended to be arranged between the head 14 of the fixing device 13 and the inner flange 8. In addition, figure 14 shows that the frame screw comprises a matching-fit section 10 as shown in figure 7 arranged between the inner flange 8 and the end face 12a of the casing 2. The outer part 24 of the adapter is designed to fit into the bore 5 that is created by the inner surface of the first section 6 and the inner surface of the inner section of the inner flange 8. The first section 6 of the bore 5 is advantageously arranged to receive a tool for rotation of the casing 2. The first section 6 can thus be designed to have an angular shape, for example it can be triangular, four-sided, five-sided, hexagonal, etc, as has been described above. The second inner flange 30 of the adapter 23 is advantageously designed in a corresponding way in order to fit into the profile that is created by the bore 5 in the first section. The adapter 23 can, in addition, be designed to fit into the matching-fit section 10 when the matching-fit section 10 is designed with projections that extend into the bore 5 in such a way that the adapter can be in contact with the projections. The matching-fit section 10 in figure 14 can be omitted in accordance with what was described in association with figure 8.

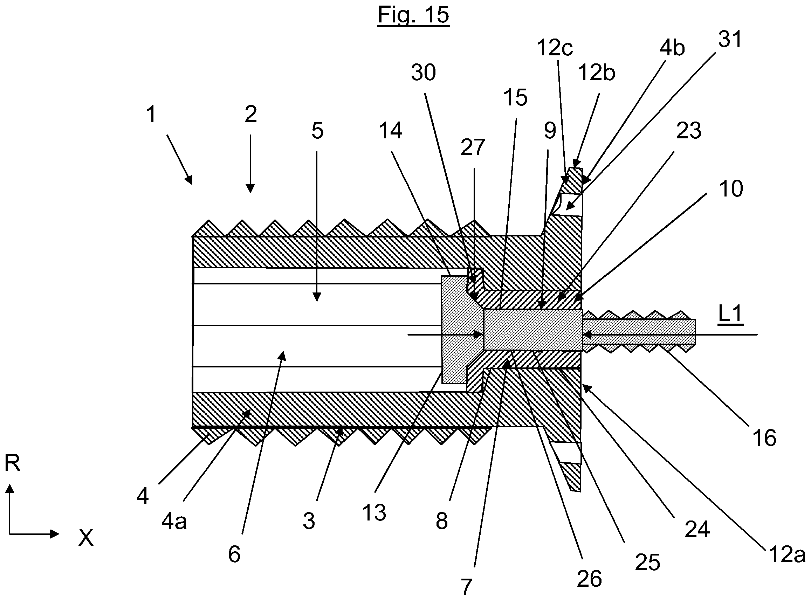

Figure 15 shows schematically a frame screw 1 comprising a fixing device 13, a casing 2 and an adapter 23 according to an embodiment of the invention. The frame screw 1 shown in figure 15 is identical to the frame screw 1 shown in figure 9, but with the difference that the adapter 23 comprises a second inner flange 30 intended to be arranged between the head 14 of the fixing device 13 and the inner flange 8. Figure 15 shows that the second inner flange comprises a specially-modified section 27 in the form of a truncated cone and that the head 14 of the fixing device has a corresponding shape. The specially-modified sections 27 provide a stable contact between the fixing device 13 and the adapter 23.

In addition, figure 15 shows that the frame screw comprises a matching-fit section 10 as shown in figure 7 arranged between the inner flange 8 and the end face 12a of the casing 2. The outer part 24 of the adapter is designed to fit into the bore 5 that is created by the inner surface of the first section 6 and the inner surface of the inner flange 8. The first section 6 of the bore 5 is advantageously arranged to receive a tool for rotation of the casing 2. The first section 6 can thus be designed to have an angular shape, for example it can be triangular, four-sided, five-sided, hexagonal, etc, as has been described above. The second inner flange 30 of the adapter 23 is advantageously designed in a corresponding way in order to fit into the profile that is created by the bore 5 in the first section. In addition, the adapter 23 can be designed to fit into the matching-fit section 10 when the matching-fit section 10 is designed with projections that extend into the bore 5 in such a way that the adapter can be in contact with the projections. The matching-fit section 10 in figure 15 can be omitted in accordance with what was described in association with figure 8.

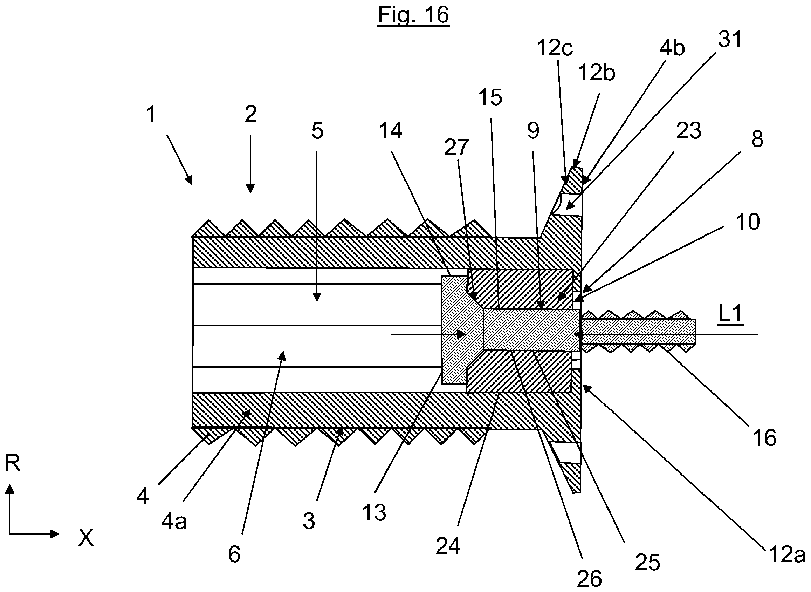

Figure 16 shows schematically a frame screw 1 comprising a fixing device 13, a casing 2 and an adapter 23 according to an embodiment of the invention. The frame screw 1 shown in figure 16 is identical to the frame screw 1 shown in figure 10, but with the difference that the casing only comprises a first section 6 and an inner flange 8. The bore 5 thus consists of the inner surface of the first section 6 and the inner surface of the inner flange 8. The inner flange 8 can comprise a specially-modified matching-fit section 10 arranged to receive a tool for rotation of the casing during installation, but can also be designed with a circular cross section.

In figure 16, the adapter 23 is designed to fit into the profile that is created by the inner surface of the first section 6. The outer part 24 of the adapter is designed to fit into the bore 5 that is created by the inner surface of the first section 6 and the inner surface of the inner flange 8. The first section 6 of the bore 5 is advantageously arranged to receive a tool for rotation of the casing 2. The first section 6 can thus be designed to have an angular shape, for example it can be triangular, four-sided, five-sided, hexagonal, etc, as has been described above. The outer part 23 of the adapter 23 is advantageously designed in a corresponding way in order to fit into the profile that is created by the bore 5 in the first section.

The adapter 23 has a length L1 in the bore 5 measured from the inner flange. The inner part 25 of the adapter 23 creates a bore with a diameter D1, determined by the length L1, which constitutes a guiding section 9 for the fixing device 13. The fixing device 13 is intended to be arranged in the guiding section 9 and the adapter 23 is designed to prevent too much movement of the fixing device 13 in relation to the central axis of the cylindrical unit 3.

In another embodiment of the invention, the adapter 23 comprises a second inner flange 30 designed to fit into the part of the bore 5 that is created by the inner surface of the inner flange 8. An advantage of this is that the length of the guiding section is further increased, which reduces the demands on the tolerances in association with the diameter D1.

Figure 16 shows that the adapter 23 comprises a specially-modified section 27 in the form of a truncated cone and that the head 14 of the fixing device 13 has a corresponding shape. The specially-modified sections 27 provide a stable contact between the fixing device 13 and the adapter 23. The adapter 23 and the head 14 can, however, be designed without the specially-modified sections 27, that is both the adapter 23 and the head can be designed with straight sections.

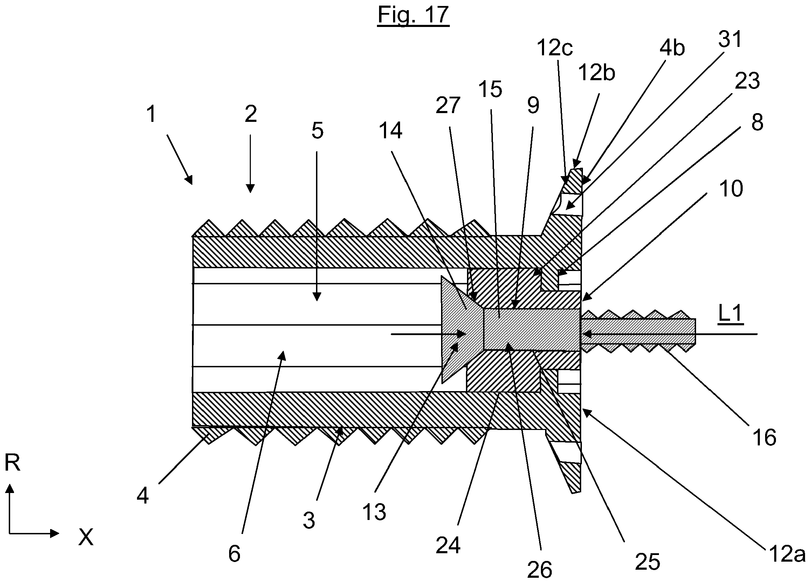

Figure 17 shows schematically a frame screw comprising a fixing device, a casing and an adapter according to an embodiment of the invention. The frame screw 1 shown in figure 17 is identical to the frame screw 1 shown in figure 16, but with the difference that the casing only comprises a first section 6, an inner flange 8 and a matching-fit section 10. The inner flange 8 is located between the matching-fit section 10 and the first section 6. The matching-fit section 10 is arranged to receive a tool for rotation of the casing during installation. The bore 5 thus consists of the inner surface of the first section 6, the inner surface of the inner flange 8 and the inner surface of the matching-fit section 10. The inner surface of the inner flange 8 has advantageously an essentially circular cross section.

In figure 17, the adapter 23 is designed to fit into the profile that is created by the inner surface of the first section 6. The outer part 24 of the adapter is designed to fit into the bore 5 that is created by the inner surface of the first section 6 and the inner surface of the inner flange 8. The first section 6 of the bore 5 is advantageously arranged to receive a tool for rotation of the casing 2. The first section 6 can thus be designed to have an angular shape, for example it can be triangular, four-sided, five-sided, hexagonal, etc, as has been described above. The outer part 23 of the adapter 23 is advantageously designed in a corresponding way in order to fit into the profile that is created by the bore 5 in the first section.

The adapter 23 has a length L1 in the bore 5 measured from the inner flange. The inner part 25 of the adapter 23 creates a bore with a diameter D1 determined by the length L1, that constitutes a guiding section 9 for the fixing device 13. The fixing device 13 is intended to be arranged in the guiding section 9 and the adapter 23 is designed to prevent too much movement of the fixing device 13 in relation to the central axis of the cylindrical unit 3.

Figure 17 shows that the adapter 23 comprises a second inner flange 30 intended to fit into the part of the bore 5 that is created by the inner surface of the inner flange 8. Figure 17 also shows that the second inner flange is arranged to fit into the matching-fit section 10. The matching-fit section 10 comprises a number of projections that extend in the direction towards the centre of the bore. The projections form contact surfaces for the adapter 23 in such a way that the position of the adapter 23 is locked in the matching-fit section. The adapter 23 has thus an extent in the bore 5 between the head 14 of the fixing device 13 and the end face 12a of the cylindrical unit. An advantage of this is that the length of the guiding section is further increased, which reduces the demands on the tolerances in association with the diameter D1. It should, however, be mentioned that the second inner flange 30 can be shorter, that is it can terminate before the end face 12a. The adapter 23 can thus have a length that can vary from an extent that consists of the distance from the head 14 to at least a short distance into the inner flange to an extent that consists of the distance between the head 14 and the end face 12a.

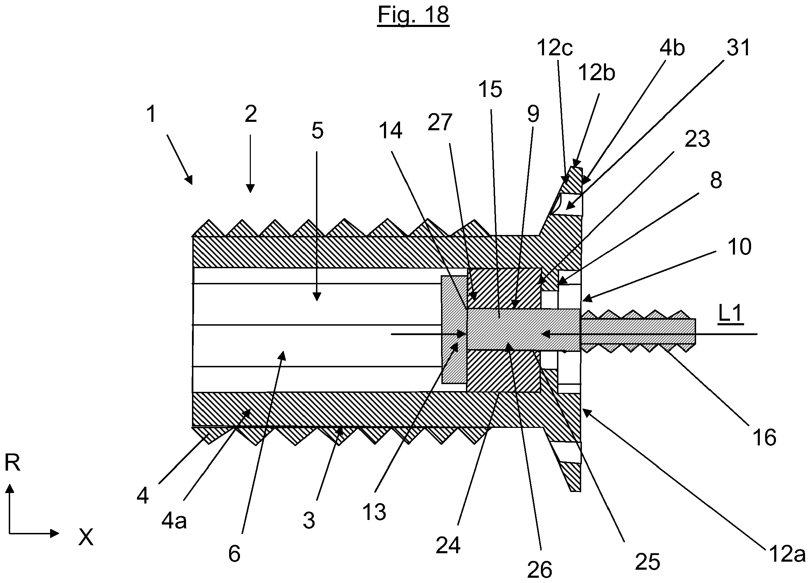

Figure 17 shows that the adapter 23 comprises a specially-modified section 27 in the form of a truncated cone and that the head 14 of the fixing device 13 has a corresponding shape. The specially-modified sections 27 provide a stable contact between the fixing device 13 and the adapter 23. The adapter 23 and the head 14 can, however, be designed without the specially-modified sections 27, that is both the adapter 23 and the head can be designed with straight sections, which is shown in figure 18.

Figure 18 shows schematically a frame screw 1 comprising a fixing device 13, a casing 2 and an adapter 23 according to an embodiment of the invention. The frame screw 1 shown in figure 18 is identical to the frame screw 1 shown in figure 17, but with the difference that the adapter 23 and the fixing device do not have the specially-modified surfaces (27 in figure 17) and have essentially straight contact surfaces that lie against each other. Another difference is that in figure 18 the adapter 23 extends between the head 14 and the inner flange 8.

Both figure 17 and figure 18 show that the inner flange 8 is located between the matching-fit section 10 and the first section 6. In the embodiments shown, the matching-fit section 10 has the same dimensions as the first section 6, that is they have the same shape. An advantage of this is that the same tool can be used in the matching-fit section 10 as in the first section 6.

A combination of the embodiments described above is possible within the framework of the invention. As an example, it can be mentioned that a combination of the embodiments in figures 17 and 18 means that the adapter 18 can have specially-modified sections in accordance with figure 17 but can lack a second inner flange 30 that is shown in figure 18. A combination of figures 17 and 18 also means that the adapter can lack the specially-modified sections that are shown in figure 17 but can comprise a second inner flange 30 as shown in figure 18.

A combination of figures 5-7, 10-13 and 16-18 would result in a first adapter 23 on one side of the inner flange 8 and a second adapter 23 on the other side of the inner flange, with the inner parts of the two adapters together creating the guiding section 9. The inner surface of the inner flange 8 can also be included and create the guiding section 9 together with the two adapters 23.

The invention is thus not limited to the embodiments described above, but can be varied within the framework of the attached claims. As an example, it can be mentioned that the adapter 23 can comprise such a specially-modified section as that described in association with figure 9.

**Claims**

1.  Casing (2) for a frame screw (1) wherein the casing (2) comprises a cylindrical unit (3) having an at least partially threaded (4) outer casing (4a) and an outer flange (4b) comprising an end face (12a) having a spread in the radial direction (R) greater than the outer casing (4a), wherein the outer flange (4b) comprises an edge part (12b) which delimits the outer flange (4b) in the radial direction (R), wherein the cylindrical unit (3) comprises a duct (5) passing through it in the axial direction (X), said duct comprising a first portion (6) configured with a cross section in the radial direction (R) which is suitable for the fitting-in of a tool which will rotate the cylindrical unit, as well as an inner flange (8) comprising an inner section (9), wherein the outer flange (4b) comprises a machining surface (12c) having an extent from the edge part (12b) to the outer casing (4a), the machining surface (12c) being arranged at an angle Φ relative to a normal to the outer casing (4a), wherein the outer flange (4b) comprises through holes (31) extending from the end face (12a) through the outer flange (4b) to the machining surface (12c), the end face (12a) comprising first openings (32) for the respective holes (31), and wherein the machining surface (12c) comprises corresponding second openings (33), each second opening (33) being delimited by a front edge (35a) and a rear edge (35b) comprising a cutting edge (35b) arranged to machine a surface of a workpiece (17) into which the casing (2) is intended to be screwed, wherein the hole (31) is arranged to evacuate material machined by the cutting edge (35) away from the workpiece (17), **characterized in that** the angle Φ is greater than zero and that the through holes (31) are delimited by the edge part (12b).

2.  Casing (2) according to Claim 1, **characterized in that** the end face (12a) has a spread in the radial direction (R) which exceeds the spread of the outer casing (4a) in the radial direction (R).

3.  Casing (2) according to Claim 1 or 2, **characterized in that** the machining surface (12c) is symmetrically and/or asymmetrically conical, or symmetrically or asymmetrically convex, and/or symmetrically or asymmetrically concave.

4.  Casing (2) according to any one of the preceding claims, **characterized in that** the holes (31) are each arranged in the outer flange (4b) at an angle $\varphi 1$ and $\varphi 2$ relative to a normal N to the end face (12a), the angles $\varphi 1$ and $\varphi 2$ being substantially perpendicular to each other.

5.  Casing (2) according to any one of the preceding claims, **characterized in that** the machining surface (12c) comprises recesses (34) arranged with an extent substantially in a rotational direction (R1) of the casing (2), each recess (34) extending in the rotational direction (R1) from the front edge (35a) of the second opening (34) to a position before the rear edge (35b) of the next second opening (34).

6.  Casing (2) according to Claim 5, **characterized in that** the recesses (34) extend sufficiently far towards the holes (31) that the front edge (35a) is lower than the rear edge (35b).

7.  Casing (2) according to any one of the preceding claims, **characterized in that** the edge part (12b) has a thickness which allows the edge part (12b) to resist bending when the casing (2) is screwed into the workpiece (17) in such a way that the edge part (12b) comes into contact with the workpiece, without the edge part (12b) being able to bear against the workpiece (17) and machine the workpiece (17) when the casing (2) is screwed into the workpiece (17).

8.  Casing (2) according to Claim 7, **characterized in that**, when the holes (31) evacuate the material from under the machining surface (12c), the edge part (12b) can compress the material in the workpiece (17) into an even and circular depression.

9.  Casing (2) according to Claim 7, **characterized in that** the duct (5) comprises the first portion (6) and the inner flange (8) only.

10. Frame screw (1) **characterized in that** the frame screw (1) comprises a casing (2) according to any one of claims 1-9, and a fastening member (13), which can be fitted into the duct (5; 26) and the inner section (9), wherein the frame screw comprising an adapter disposed at least partially in the duct, which adapter comprises an outer part (24) arranged to fit in the duct (5) and an inner part (25) arranged to constitute at least a part of a guide section (9), the guide section (9) having a cross section (D1) in the radial direction tailored to a length (L1) of the guide section (9) in the axial direction in such a way that the guide section (9) limits the radial freedom of motion of a centre axis of the fastening member (13) in relation to a centre axis of the guide member (9) to a motion of a maximally predetermined magnitude at the end face of the cylindrical unit (3).

11. Frame screw (1) according to Claim 10, **characterized in that** the cross section (D1) of the guide section (9) in the radial direction is tailored to a cross section (D2) of a supporting section (15), having a length (L3), of the fastening member (13).

12. Frame screw (1) according to Claim 10 or 11, **char-**

acterized in that the duct (5) comprises a specially configured fitting part (10) placed in the axial direction on the other side of the inner flange (8) in relation to the first portion (6).

13. Frame screw (1) according to Claim 10 or 11, **characterized in that** the duct (5) comprises a specially configured fitting part (10) placed in the axial direction between the inner flange (8) and the first portion (6).

14. Frame screw (1) according to Claim 11, 12 or 13, **characterized in that** the adapter (23) comprises an outer part (24) having a configuration corresponding to the internal measurements of the fitting part (10), and an inner part (25) having an inner shell surface with corresponding measurements to the inner shell surface of the inner section in the inner flange (8), the inner section of the inner flange (8) together with the inner part (25) of the adapter (23) constituting the guide section (9).

15. Frame screw (1) according to Claim 12 or 13, **characterized in that** the adapter (23) comprises an outer part (24) having a configuration corresponding to the internal measurements of the fitting part (10) and the inner section of the inner flange (8), the inner part (25) of the adapter (23) constituting the guide section (9).

16. Frame screw (1) according to Claim 10, **characterized in that** the duct (5) comprises just the first portion (6) and the inner flange (8).

17. Frame screw (1) according to any one of the preceding claims 10-15, **characterized in that** the adapter (23) is placed at least in the first portion (6), and **in that** the adapter comprises an outer part (24) having a configuration corresponding to the internal measurements of the first portion (6), the inner part (25) of the adapter (23) constituting at least a part of the guide section (9).

18. Frame screw (1) according to Claim 17, **characterized in that** the adapter (23) is placed in the first portion (6) and in the inner flange (8), and **in that** the adapter comprises an outer part (24) having a configuration corresponding to the internal measurements of the first portion (6) and the internal measurements of the inner flange (8), the inner part (25) of the adapter (23) constituting at least a part of the guide section (9).

19. Frame screw (1) according to Claim 10 or 11, **characterized in that** the inner flange (8) extends all the way to an end face (12a) of the cylindrical unit (3), the inner shell surface of the inner flange (8) forming the guide section (9).

20. Frame screw (1) according to any one of the preceding claims 10 or 11, **characterized in that** the guide section (9) and the supporting section (15) are configured according to the following parameters and mutual relationships:

L1 = the length of the guide section in the axial direction
L2 = the distance between the guide section and the end face of the cylindrical unit (inclusive of the guide section)
D1 = the diameter of the guide section
L3 = the length of the supporting section in the axial direction along the centre axis of the fastening member
L4 = the distance between the head of the fastening member and the end face of the cylindrical unit (exclusive of the head) along the centre axis of the fastening member when the head of the fastening member bears against the inner flange
D2 = the diameter of the supporting section
$\alpha$ = the angle between the centre axis of the fastening member and the centre axis of the guide device
Rradial = the maximum radial motion of the centre axis of the fastening member when L1-L4, D1 and D2 are given in relation to the centre axis of the cylinder device
Rrot = the maximum rotary motion of the centre axis of the fastening member when L1-L4, D1 and D2 are given in relation to the centre axis of the cylinder device.

$$Rradial = (D1-D2)/2$$

$$\alpha = \text{arctangent } ((D1-D2)/L1)$$

$$Rrot = L4 \times \text{tangent } (\alpha) \times 1/2$$

$$Rrot = L4 \times (D1-D2)/L1 \times 1/2$$

21. Frame screw (1) according to Claim 20, **characterized in that** $L2 \geq L1$; $L1 \leq L3$; and in which $L4 \leq L3$.

**Patentansprüche**

1. Gehäuse (2) für eine Rahmenschraube (1), wobei das Gehäuse (2) eine zylindrische Einheit (3) umfasst mit einem zumindest teilweise mit einem Gewinde (4) versehenen äußeren Gehäuse (4a) und einem äußeren Flansch (4b) umfassend eine Endfläche (12a) mit einer Ausbreitung in der radialen Richtung (R) größer als das äußere Gehäuse (4a), wobei der äußere Flansch (4b) einen Kantteil (12b) umfasst, der den äußeren Flansch (4b) in der radialen Richtung (R) abgegrenzt, wobei die zylindrische Einheit (3) einen Kanal (5) umfasst, der in der axialen Richtung (X) dadurch läuft, wobei der Kanal einen ersten Teil (6), der mit einem Querschnitt in der radialen Richtung (R) ausgelegt ist, geeignet zum Montieren eines Werkzeugs, das die zylindrische Einheit drehen wird, sowie einen inneren Flansch (8) umfassend einen inneren Abschnitt (9) umfasst, wobei der äußere Flansch (4b) eine Verarbeitungsfläche (12c) mit einem Ausmaß vom Kantteil (12b) zum äußeren Gehäuse (4a) umfasst, wobei die Verarbeitungsfläche (12c) in einem Winkel Φ zur Normale zum äußeren Gehäuse (4a) angeordnet ist, wobei der äußere Flansch (4b) Durchgangslöcher (31) umfasst, die sich von der Endfläche (12a) durch den äußeren Flansch (4b) zur Verarbeitungsfläche (12c) erstrecken, wobei die Endfläche (12a) erste Öffnungen (32) für die jeweiligen Löcher (31) umfasst, und wobei die Verarbeitungsfläche (12c) entsprechende zweite Öffnungen (33) umfasst, wobei jede zweite Öffnung (33) durch eine Vorderkante (35a) und eine Hinterkante (35b) umfassend eine Schneidkante (35b) abgegrenzt ist, die dafür eingerichtet ist, eine Oberfläche eines Werkstücks (17) zu verarbeiten, worin das Gehäuse (2) eingeschraubt werden soll, wobei das Loch (31) dafür eingerichtet ist, durch die Schneidkante (35) gefrästes Material vom Werkstück (17) abzuführen, **dadurch gekennzeichnet, dass** der Winkel Φ größer als Null ist, und dass die Durchgangslöcher (31) durch den Kantteil (12b) abgegrenzt sind.

2. Gehäuse (2) nach Anspruch 1, **dadurch gekennzeichnet, dass** die Endfläche (12a) eine Ausbreitung in der radialen Richtung (R) aufweist, die die Ausbreitung des äußeren Gehäuses (4a) in der radialen Richtung (R) überschreitet.

3. Gehäuse (2) nach Anspruch 1 oder 2, **dadurch gekennzeichnet, dass** die Verarbeitungsfläche (12c) symmetrisch und/oder asymmetrisch konisch oder symmetrisch oder asymmetrisch konvex und/oder symmetrisch und/oder asymmetrisch konkav ist.

4. Gehäuse (2) nach einem der vorgehenden Ansprüche, **dadurch gekennzeichnet, dass** die Löcher (31) jeweils im äußeren Flansch (4b) in einem Winkel $\varphi 1$ und $\varphi 2$ im Verhältnis zur Normale N zur Endfläche (12a) angeordnet sind, wobei die Winkel $\varphi 1$ und $\varphi 2$ im Wesentlichen senkrecht zueinander sind.

5. Gehäuse (2) nach einem der vorgehenden Ansprüche, **dadurch gekennzeichnet, dass** die Verarbeitungsfläche (12c) Ausnehmungen (34) umfasst, die mit einer Erstreckung im Wesentlichen in einer Drehrichtung (R1) des Gehäuses (2) angeordnet sind, wobei jede Ausnehmung (34) sich in einer Drehrichtung (R1) von der Vorderkante (35a) der zweiten Öffnung (34) zu einer Position vor der Hinterkante (35b) der nächsten Öffnung (34) erstreckt.

6. Gehäuse (2) nach Anspruch 5, **dadurch gekennzeichnet, dass** sich die Ausnehmungen (34) ausreichend weit gegen die Löcher (31) erstrecken, so dass die Vorderkante (35a) niedriger als die Hinterkante (35b) ist.

7. Gehäuse (2) nach einem der vorgehenden Ansprüche, **dadurch gekennzeichnet, dass** der Kantteil (12b) eine Dicke aufweist, die verhindert, dass der Kantteil (12b) gebogen wird, wenn das Gehäuse (2) in das Werkstück (17) eingeschraubt wird, so dass der Kantteil (12b) mit dem Werkstück in Kontakt kommt ohne, dass der Kantteil (12b) gegen das Werkstück (17) anliegt und das Werkstück (17) verarbeitet, wenn das Gehäuse (2) in das Werkstück (17) eingeschraubt wird.

8. Gehäuse (2) nach Anspruch 7, **dadurch gekennzeichnet, dass**, wenn das Material von unter der Verarbeitungsfläche (12c) durch die Löcher (31) abgeführt wird, kann der Kantteil (12b) das Material im Werkstück (17) zu einer ebenen und kreisförmigen Vertiefung zusammenpressen.

9. Gehäuse (2) nach Anspruch 7, **dadurch gekennzeichnet, dass** der Kanal (5) nur den ersten Teil (6) und den inneren Flansch (8) umfasst.

10. Rahmenschraube (1), **dadurch gekennzeichnet, dass** die Rahmenschraube (1) ein Gehäuse (2) nach einem der Ansprüche 1-9 und ein Befestigungselement (13), das in den Kanal (5; 26) und den inneren Abschnitt (9) montiert werden kann, umfasst, wobei die Rahmenschraube einen Anpassungsteil umfasst, der zumindest teilweise im Kanal angeordnet ist, welcher Anpassungsteil einen äußeren Teil (24), der zum Einpassen im Kanal (5) eingerichtet ist, und einen inneren Teil (25), der zum Ausmachen mindestens eines Teils eines Führungsabschnitts (9) eingerichtet ist, umfasst, wobei der Führungsabschnitt (9) einen Querschnitt (D1) in der radialen Richtung aufweist, der an eine Länge (L1) des Führungsabschnitts (9) in der axialen Richtung so angepasst ist, dass der Führungsabschnitt (9) die radiale Bewegungsfreiheit einer Mittelachse des Befestigungselements (13) im Verhältnis zur Mittelachse des Führungselements (9) auf eine Bewegung einer maximal vorgegebenen Größe der Endfläche der zylindrischen Einheit (3) begrenzt.

11. Rahmenschraube (1) nach Anspruch 10, **dadurch**

**gekennzeichnet, dass** der Querschnitt (D1) des Führungsabschnitts (9) in der radialen Richtung an einen Querschnitt (D2) eines Unterstützungsabschnitts (15), mit einer Länge (L3), des Befestigungselements (13) angepasst ist.

12. Rahmenschraube (1) nach Anspruch 10 oder 11, **dadurch gekennzeichnet, dass** der Kanal (5) einen sonderausgelegten passgenauen Teil (10) umfasst, der in der axialen Richtung auf der anderen Seite des inneren Flanschs (8) im Verhältnis zum ersten Teil (6) angeordnet ist.

13. Rahmenschraube (1) nach Anspruch 10 oder 11, **dadurch gekennzeichnet, dass** der Kanal (5) einen sonderausgelegten passgenauen Teil (10) umfasst, der in der axialen Richtung zwischen dem inneren Flansch (8) und dem ersten Teil (6) angeordnet ist.

14. Rahmenschraube (1) nach Anspruch 11, 12 oder 13, **dadurch gekennzeichnet, dass** der Adapter (23) einen äußeren Teil (24) mit einer den Innenmaßen des passgenauen Teils (10) entsprechenden Gestaltung und einen inneren Teil (25) mit einer inneren Mantelfläche mit entsprechenden Maßen wie die innere Mantelfläche des inneren Abschnitts im inneren Flansch (8) umfasst, wobei der innere Abschnitt des inneren Flanschs (8) zusammen mit dem inneren Teil (25) des Anpassungsteils (23) den Führungsabschnitt (9) darstellt.

15. Rahmenschraube (1) nach Anspruch 12 oder 13, **dadurch gekennzeichnet, dass** der Anpassungsteil (23) einen äußeren Teil (24) mit einer den Innenmaßen des passgenauen Teils (10) und dem inneren Abschnitt des inneren Flanschs (8) entsprechenden Gestaltung umfasst, wobei der innere Teil (25) des Anpassungsteils (23) den Führungsabschnitt (9) darstellt.

16. Rahmenschraube (1) nach Anspruch 10, **dadurch gekennzeichnet, dass** der Kanal (5) nur den ersten Teil (6) und den inneren Flansch (8) umfasst.

17. Rahmenschraube (1) nach einem der vorgehenden Ansprüche 10-15, **dadurch gekennzeichnet, dass** der Anpassungsteil (23) zumindest in dem ersten Teil (6) angeordnet ist, und dass der Anpassungsteil einen äußeren Teil (24) mit einer den Innenmaßen des ersten Teils (6) entsprechenden Gestaltung umfasst, wobei der innere Teil (25) des Anpassungsteils (23) zumindest einen Teil des Führungsabschnitts (9) darstellt.

18. Rahmenschraube (1) nach Anspruch 17, **dadurch gekennzeichnet, dass** der Anpassungsteil (23) im ersten Teil (6) und im inneren Flansch (8) angeordnet ist, und dass der Anpassungsteil einen äußeren Teil (24) mit einer den Innenmaßen des ersten Teils (6) und den Innenmaßen des inneren Flanschs (8) entsprechenden Gestaltung umfasst, wobei der innere Teil (25) des Anpassungsteils (23) zumindest einen Teil des Führungsabschnitts (9) darstellt.

19. Rahmenschraube (1) nach Anspruch 10 oder 11, **dadurch gekennzeichnet, dass** sich der innere Flansch (8) bis zu einer Endfläche (12) der zylindrischen Einheit (3) erstreckt, wobei die innere Mantelfläche des inneren Flanschs (8) den Führungsabschnitt (9) bildet.

20. Rahmenschraube (1) nach einem der vorgehenden Ansprüche 10 oder 11, **dadurch gekennzeichnet, dass** der Führungsabschnitt (9) und der Unterstützungsabschnitt (15) gemäß den folgenden Parametern und gegenseitigen Verhältnissen ausgeformt sind:

L1 = die Länge des Führungsabschnitts in der axialen Richtung
L2 = der Abstand zwischen dem Führungsabschnitt und der Endfläche der zylindrischen Einheit (einschließlich des Führungsabschnitts)
D1 = Durchmesser des Führungsabschnitts
L3 = die Länge des Unterstützungsabschnitts in der axialen Richtung entlang der Mittelachse des Befestigungselements
L4 = der Abstand zwischen dem Kopf des Befestigungselements und der Endfläche der zylindrischen Einheit (ausschließlich des Kopfes) entlang der Mittelachse des Befestigungselements, wenn der Kopf des Befestigungselements am inneren Flansch anliegt.
D2 = der Durchmesser des Unterstützungsabschnitts
$\alpha$ = der Winkel zwischen der Mittelachse des Befestigungselements und der Mittelachse der Führungseinrichtung
Rradial = die maximale radiale Bewegung der Mittelachse des Befestigungselements, wenn L1-L4, D1 und D2 in Bezug auf die Mittelachse der Zylindereinrichtung gegeben sind
Rrot = die maximale Drehbewegung der Mittelachse des Befestigungselements, wenn L1-L4, D1 und D2 in Bezug auf die Mittelachse der Zylindereinrichtung gegeben sind

$$Rradial = (D1-D2)/2$$

$$\alpha = \text{Arkustangens} \left( (D1-D2)/L1 \right)$$

$$Rrot = L4 \times \text{tangent}(\alpha) \times 1/2$$

$$Rrot = L4 \times (D1-D2)/L1 \times 1/2$$

21. Rahmenschraube (1) nach Anspruch 20, **dadurch gekennzeichnet, dass** L2 ≥ L1; L1 ≤ L3; und worin L4 ≤ L3.

**Revendications**

1. Boîtier (2) pour une vis de cadre (1) dans lequel le boîtier (2) comprend une unité cylindrique (3) ayant un boîtier extérieur (4a) au moins partiellement fileté (4) et une bride extérieure (4b) comprenant une face d'extrémité (12a) ayant un étalement dans la direction radiale (R) supérieur au boîtier extérieur (4a), dans lequel la bride extérieure (4b) comprend une partie de bord (12b) qui délimite la bride extérieure (4b) dans la direction radiale (R), dans lequel l'unité cylindrique (3) comprend un conduit (5) le traversant dans la direction axiale (X), ledit conduit comprenant une première partie (6) configurée avec une section transversale dans la direction radiale (R) qui convient pour l'adaptation d'un outil qui fera tourner l'unité cylindrique, ainsi qu'une bride intérieure (8) comprenant une section intérieure (9), dans lequel la bride extérieure (4b) comprend une surface d'usinage (12c) ayant une étendue de la partie de bord (12b) au boîtier extérieur (4a), la surface d'usinage (12c) étant disposée selon un angle Φ par rapport à une normale à l'extérieur boîtier (4a), dans lequel la bride extérieure (4b) comprend des trous traversants (31) s'étendant de la face d'extrémité (12a) à travers la bride extérieure (4b) jusqu'à la surface d'usinage (12c), la face d'extrémité (12a) comprenant des premières ouvertures (32) pour les trous respectifs (31), et dans lequel la surface d'usinage (12c) comprend des deuxièmes ouvertures correspondantes (33), chaque deuxième ouverture (33) étant délimitée par un bord avant (35a) et un bord arrière (35b) comprenant une arête coupante (35b) agencée pour usiner une surface d'une pièce (17) dans laquelle le boîtier (2) est destiné à être vissé, dans lequel le trou (31) est agencé pour évacuer le matériau usiné par l'arête coupante (35) à l'écart de la pièce (17), **caractérisé en ce que** l'angle Φ est supérieur à zéro et que les trous traversant (31) sont délimités par la partie de bord (12b).

2. Boîtier (2) selon la revendication 1, **caractérisé en ce que** la face d'extrémité (12a) présente un étalement dans la direction radiale (R) qui dépasse l'étalement du boîtier extérieur (4a) dans la direction radiale (R).

3. Boîtier (2) selon la revendication 1 ou 2, **caractérisé en ce que** la surface d'usinage (12c) est conique symétriquement et / ou asymétriquement, ou convexe symétriquement ou asymétriquement, et / ou concave symétriquement ou asymétriquement.

4. Boîtier (2) selon l'une quelconque des revendications précédentes, **caractérisé en ce que** les trous (31) sont chacun disposés dans la bride extérieure (4b) selon un angle $\varphi^1$ et $\varphi^2$ par rapport à une normale N à la face d'extrémité (12a), les angles $\varphi^1$ et $\varphi^2$ étant essentiellement perpendiculaires l'un à l'autre.

5. Boîtier (2) selon l'une quelconque des revendications précédentes, **caractérisé en ce que** la surface d'usinage (12c) comprend des évidements (34) disposés avec une étendue essentiellement dans une direction de rotation (R1) du boîtier (2), chaque évidement (34) s'étendant dans la direction de rotation (R1) depuis le bord avant (35a) de la deuxième ouverture (34) jusqu'à une position avant le bord arrière (35b) de la deuxième ouverture suivante (34).

6. Boîtier (2) selon la revendication 5, **caractérisé en ce que** les évidements (34) s'étendent suffisamment loin vers les trous (31) pour que le bord avant (35a) soit plus bas que le bord arrière (35b).

7. Boîtier (2) selon l'une quelconque des revendications précédentes, **caractérisé en ce que** la partie de bord (12b) a une épaisseur qui permet à la partie de bord (12b) de résister à la flexion lorsque le boîtier (2) est vissé dans la pièce (17) de telle sorte que la partie de bord (12b) entre en contact avec la pièce, sans que la partie de bord (12b) puisse s'appuyer contre la pièce (17) et usiner la pièce (17) lorsque le boîtier (2) est vissé dans la pièce (17).

8. Boîtier (2) selon la revendication 7, **caractérisé en ce que**, lorsque les trous (31) évacuent le matériau au-dessous de la surface d'usinage (12c), la partie de bord (12b) peut comprimer le matériau dans la pièce (17) en une dépression circulaire et plane.

9. Boîtier (2) selon la revendication 7, **caractérisé en ce que** le conduit (5) comprend uniquement la première partie (6) et la bride intérieure (8).

10. Vis de cadre (1) **caractérisée en ce que** la vis de cadre (1) comprend un boîtier (2) selon l'une quelconque des revendications 1 à 9, et un élément de fixation (13) qui peut être ajusté dans le conduit (5; 26) et la section intérieure (9), dans laquelle la vis de cadre comprenant un adaptateur disposé au moins partiellement dans le conduit, ledit adaptateur comprenant une partie extérieure (24) agencée pour s'adapter dans le conduit (5) et une partie intérieure (25) agencée pour constituer au moins une partie d'une section de guidage (9), la section de guidage (9) ayant une section transversale (D1) dans la direction radiale adaptée à une longueur (L1) de la section de guidage (9) dans la direction axiale dans une telle de manière à ce que la section de guidage (9) limite la liberté de mouvement radiale d'un axe central de l'élément de fixation (13) par rapport à un axe central de l'élément de guidage (9) à un mouvement d'une amplitude maximale prédéterminée à la face d'extrémité de l'unité cylindrique (3).

11. Vis de cadre (1) selon la revendication 10, **caractérisée en ce que** la section transversale (D1) de la section de guidage (9) dans une direction radiale est ajustée à une section transversale (D2) d'une section de support (15) ayant une longueur (L3) du moyen de fixation (13).

12. Vis de cadre (1) selon la revendication 10 ou 11, **caractérisée en ce que** le conduit (5) comprend une pièce de raccord spécialement configurée (10) placée dans la direction axiale de l'autre côté de la bride intérieure (8) par rapport à la première partie (6).

13. Vis de cadre (1) selon la revendication 10 ou 11, **caractérisée en ce que** le conduit (5) comprend une pièce de raccord spécialement configurée (10) placée dans la direction axiale entre la bride intérieure (8) et la première partie (6).

14. Vis de cadre (1) selon la revendication 11, 12 ou 13, **caractérisée en ce que** l'adaptateur (23) comprend une partie extérieure (24) avec une configuration qui correspond aux mesures intérieures de la pièce de raccord (10), et une partie intérieure (25) avec une surface de coque intérieure avec des mesures correspondantes à la surface de coque intérieure de la section intérieure dans la bride intérieure (8), la section intérieure de la bride intérieure (8) avec la partie intérieure (25) de l'adaptateur (23) constituant la section de guidage (9).

15. Vis de cadre (1) selon la revendication 12 ou 13, **caractérisée en ce que** l'adaptateur (23) comprend une partie extérieure (24) avec une configuration qui correspond aux mesures intérieures de la pièce de raccord (10) et la section intérieure de la bride intérieure (8), la partie intérieure (25) de l'adaptateur (23) constituant la section de guidage (9).

16. Vis de cadre (1) selon la revendication 10, **caractérisée en ce que** le conduit (5) comprend uniquement la première partie (6) et la bride intérieure (8).

17. Vis de cadre (1) selon l'une quelconque des revendications précédentes 10 à 15, **caractérisée en ce que** l'adaptateur (23) est arrangé au moins dans la première partie (6), et que l'adaptateur comprend une partie extérieure (24) avec une configuration qui correspond aux mesures intérieures de la première partie (6), la partie intérieure (25) de l'adaptateur (23) constitue au moins une portion de la section de guidage (9).

18. Vis de cadre (1) selon la revendication 17, **caractérisée en ce que** l'adaptateur (23) est arrangé dans la première partie (6) et la bride intérieure (8), et **en ce que** l'adaptateur comprend une partie extérieure (24) avec une configuration qui correspond aux mesures intérieures de la première partie (6) et aux mesures intérieures de la bride intérieure (8), la partie intérieure (25) de l'adaptateur (23) constituant au moins une portion de la section de guidage (9).

19. Vis de cadre (1) selon la revendication 10 ou 11, **caractérisée en ce que** la bride intérieure (8) s'étend jusqu'à une face d'extrémité (12a) de l'unité cylindrique (3), la surface intérieure de la coque de la bride intérieure (8) formant la section de guidage (9).

20. Vis de cadre (1) selon l'une quelconque des revendications précédentes 10 ou 11, **caractérisée en ce que** la section de guidage (9) et la section de support (15) sont configurées selon les paramètres et relations mutuelles suivantes :

L1 = la longueur de la section de guidage dans la direction axiale

L2 = la distance entre la section de guidage et la face d'extrémité de l'unité cylindrique (y compris la section de guidage)

D1 = le diamètre de la section de guidage

L3 = la longueur de la section de support dans la direction axiale le long de l'axe central du moyen de fixation

L4 = la distance entre la tête de l'élément de fixation et la surface d'extrémité de l'unité cylindrique (à l'exclusion de la tête) le long de l'axe central du moyen de fixation lorsque la tête de l'élément de fixation s'appuie contre la bride intérieure

D2 = le diamètre de la section de support

$\alpha$ = l'angle entre l'axe central de l'élément de fixation et l'axe central du dispositif de guidage

Rradial = le mouvement radial maximal de l'axe central de l'élément de fixation lorsque L1-L4, D1 et D2 sont donnés par rapport à l'axe central du dispositif de cylindre.

Rradial = le mouvement radial maximal de l'axe central de l'élément de fixation lorsque L1-L4, D1 et D2 sont donnés par rapport à l'axe central du dispositif de cylindre.

$$\text{Rradial} = (D1-D2)/2$$

$$\alpha = \text{arctangente} \, ((D1-D2)/L1)$$

$$Rrot = L4 \times \text{tangente} \, (\alpha) \times 1/2$$

$$Rrot = L4 \times (D1-D2)/L1 \times 1/2$$

21. Vis de cadre (1) selon la revendication 20, **caractérisée en ce que** $L2 \geq L1$ ; $L1 \leq L3$ ; et où $L4 \leq L3$.

Fig. 1

EP 2 265 788 B1

Fig. 2

Fig. 2a

Fig. 2b

EP 2 265 788 B1

Fig. 2c

Fig. 2d

Fig. 2e

1
2
R1
12b
4b
35b
32
31
35a
33
34
12a
12c
R

Fig. 2f

Fig. 2g

EP 2 265 788 B1

Fig. 3

Fig. 4
(Prior art)

EP 2 265 788 B1

Fig. 5

Fig. 6

EP 2 265 788 B1

## Fig. 7

Fig. 8

EP 2 265 788 B1

Fig. 9

Fig. 10

Fig. 11

EP 2 265 788 B1

Fig. 12

EP 2 265 788 B1

Fig. 13

Fig. 14

Fig. 15

EP 2 265 788 B1

## Fig. 16

Fig. 17

EP 2 265 788 B1

Fig. 18

## REFERENCES CITED IN THE DESCRIPTION

**Patent documents cited in the description**

- WO 9004695 A1